# EUROPEAN PATENT SPECIFICATION

(11) **EP 4 362 265 B1**
(45) Date of publication and mention of the grant of the patent: **27.08.2025**
(21) Application number: 23205558.2
(22) Date of filing: 24.10.2023
(51) Int. Cl.: H02J 3/38, H02M 1/32, H02M 7/537, H02M 7/5387

(54) **GRID-CONNECTED PHOTOVOLTAIC INVERTER AND GRID-CONNECTED CONTROL METHOD**
NETZGEKOPPELTER PHOTOVOLTAIKWECHSELRICHTER UND NETZGEKOPPELTES STEUERUNGSVERFAHREN
ONDULEUR PHOTOVOLTAÏQUE CONNECTÉ AU RÉSEAU ET PROCÉDÉ DE COMMANDE CONNECTÉ AU RÉSEAU

(30) Priority: 31.10.2022 CN 202211348678
(43) Date of publication of application: 01.05.2024
(73) Proprietor: Huawei Digital Power Technologies Co., Ltd., Shenzhen, 518043 (CN)
(72) Inventor: XU, Fei, Shenzhen, 518043 (CN); YU, Xinyu, Shenzhen, 518043 (CN); ZHAO, Mingquan, Shenzhen, 518043 (CN); QU, Zisen, Shenzhen, 518043 (CN); XIN, Kai, Shenzhen, 518043 (CN)
(74) Representative: Epping - Hermann - Fischer

(56) References cited:
- AZEVEDO G M S ET AL: "New control strategy to allow the photovoltaic systems operation under grid faults", POWER ELECTRONICS CONFERENCE, 2009. COBEP '09. BRAZILIAN, IEEE, PISCATAWAY, NJ, USA, 27 September 2009 (2009-09-27), pages 196 - 201, XP031576117, ISBN: 978-1-4244-3369-8
- HUKA GELMA BONEYA ET AL: "Modeling of a Two-Stage Photovoltaic System for Grid Code Compatibility", 2018 2ND IEEE CONFERENCE ON ENERGY INTERNET AND ENERGY SYSTEM INTEGRATION (EI2), IEEE, 20 October 2018 (2018-10-20), pages 1 - 6, XP033481290, DOI: 10.1109/EI2.2018.8582258

## Description

### TECHNICAL FIELD

This application relates to the field of power electronics technologies, and in particular, to a grid-connected photovoltaic inverter and a grid-connected control method.

### BACKGROUND

In the field of power electronics technologies, an inverter circuit in a power supply system can convert an input voltage provided by an input end (for example, a power supply end) into an output voltage that matches an output end (for example, a power grid end), to supply power to the output end by using the input end. In a power supply process, a component (for example, a switching transistor in the inverter circuit) in the power supply system is limited by voltage stress and thermal stress. Therefore, to avoid overvoltage or overheating of the component, short-term transient current limiting or long-term steady current limiting needs to be performed on the power supply system. However, in an application scenario in which the inverter circuit runs based on grid forming (for example, the power supply system is equivalent to a voltage source), the output voltage of the power supply system is usually controlled, and an output current of the power supply system changes accordingly based on a load of the output end. If current limiting is directly performed on the output current of the power supply system, the power supply system is unstable. During research and practice, In the conventional technology, an output current of a power supply system usually needs to be acquired, and when the output current exceeds a preset value, a frequency of an output voltage is reduced, to reduce the output current. Response time is long, and adaptability is poor. Alternatively, when it is detected that the output current exceeds the preset value, virtual impedance is added to the power supply system, to reduce the output current. Response time is long, and adaptability is poor. In conclusion, neither of the two manners can separately control an active current and a reactive current that are output by the power supply system. The response time is long, and the adaptability is poor.

The document "New control strategy to allow the photovoltaic systems operation under grid faults" from Azevedo et al (XP031576117, ISBN: 978-1-4244-3369-8) discloses a current limiter that is made indirectly by using an active power limiter that is calculated dynamically based on the grid positive-sequence voltage.

The document "Modeling of a Two-Stage Photovoltaic System for Grid Code Compatibility" from Huka Gelma Boneya et al (XP033481290, DOI: 10.1109/EI2.2018.8582258) discloses a modeling of two-stage photovoltaic system operating under large grid disturbances

### SUMMARY

The invention refers to grid-connected photovoltaic inverter according to claim 1 and a corresponding grid-connected control method for a photovoltaic inverter according to claim 7. Preferred embodiments are defined in the dependent claims. This application provides a grid-connected photovoltaic inverter and a grid-connected control method. Based on an application scenario, current limiting may be separately performed on an active current and a reactive current at a grid-connected point. This maintains system stability, and improves system security. Response is quick, the control method is simple, and applicability is high.

According to a first aspect, this application provides a photovoltaic inverter. The photovoltaic inverter includes a control circuit and an inverter circuit. Herein, one end of the inverter circuit is connected to a direct current power supply, and the other end of the inverter circuit is connected to a power grid at a grid-connected point by using power grid impedance. The control circuit is connected to the inverter circuit. The control circuit herein may be configured to: when a current value of the grid-connected point is greater than or equal to a current amplitude limiting value, obtain an active voltage adjustment amount and/or a reactive voltage adjustment amount based on the current value of the grid-connected point, the current amplitude limiting value, and a voltage value of the grid-connected point, and control an output voltage of the inverter circuit to be a target voltage value based on the active voltage adjustment amount and/or the reactive voltage adjustment amount, to reduce the current value of the grid-connected point by reducing active power and/or reactive power output by the photovoltaic inverter. A voltage value of a target voltage herein is the target voltage value.

In this application, the control circuit may obtain the output current value of the grid-connected point (for example, in a manner of obtaining, collecting, receiving, detecting, or storing). The output current value of the grid-connected point herein may be directly collected or detected, or may be obtained through calculation by using another current value that is easy to collect or obtain. For example, the output current value is obtained through calculation by using an output current value of the inverter circuit, or may be obtained through calculation by using an output current value at a connection point between the photovoltaic inverter and the power grid impedance, or may be obtained through calculation by using an output current value at another sampling point, which may be specifically set based on an application scenario. It may be understood that, in different application scenarios (for example, the photovoltaic inverter is equivalent to a voltage source in a grid forming scenario), after the inverter circuit outputs a relatively constant output voltage, an output power and an output current of the inverter circuit may change relative to a change in a load on a power grid side. For example, when the load increases, the output power and the output current of the inverter circuit increase correspondingly, to ensure normal power supply to the load. In some application scenarios, to avoid overvoltage or overheating of a component in a power supply system, short-term transient current limiting or long-term steady current limiting needs to be performed on the power supply system. When a current value of the grid-connected point is greater than or equal to a current amplitude limiting value, the control circuit herein may obtain an active voltage adjustment amount and/or a reactive voltage adjustment amount based on the current value of the grid-connected point, the current amplitude limiting value, and a voltage value of the grid-connected point, and control an output voltage of the inverter circuit to be a target voltage value based on the active voltage adjustment amount and/or the reactive voltage adjustment amount, to reduce the current value of the grid-connected point by reducing active power and/or reactive power output by the photovoltaic inverter. The current amplitude limiting value herein may be a current amplitude limiting value obtained by the control circuit (for example, in a manner of obtaining, receiving, calculating, or storing). The current amplitude limiting value herein may be a current value, or may be a plurality of current values, or may be one current interval formed by a plurality of current values, or may be a plurality of current intervals formed by a plurality of current values. The current amplitude limiting value herein may be a vector value obtained by combining a component on each coordinate axis of a coordinate system (for example, an abc coordinate system, an xyz coordinate system, or a dq coordinate system), or may be a component value on each coordinate axis obtained by transforming and decomposing a coordinate system (for example, an abc coordinate system or an xyz coordinate system is transformed into a dq coordinate system). For example, in an application scenario of grid-connected operation, when a power grid is faulty (for example, a dip occurs in the power grid), a current output by the inverter current needs a relatively large reactive component to maintain a power grid voltage. In this case, if current limiting is performed on a power supply system, current limiting needs to be preferentially performed on an active current (for example, a q-axis current component in the dq coordinate system) output by the inverter circuit. Similarly, for example, in an application scenario in which an electric energy yield needs to be preferentially met, if current limiting is performed on the power supply system, current limiting needs to be preferentially performed on a reactive current (for example, a d-axis current component in the dq coordinate system) output by the inverter circuit. Correspondingly, the control circuit may obtain the output power (including the active power and/or the reactive power) of the inverter circuit based on the current value of the grid-connected point and the voltage value of the grid-connected point, obtain reduced output power of the inverter circuit (that is, output power of the inverter circuit that can perform current limiting, including the active power and/or the reactive power) based on the current amplitude limiting value and the voltage value of the grid-connected point, further obtain the voltage adjustment amount (including the active voltage adjustment amount and/or the reactive voltage adjustment amount), and control an output voltage of the inverter circuit to be a target voltage value based on the active voltage adjustment amount and/or the reactive voltage adjustment amount, to reduce the current value of the grid-connected point by reducing active power and/or reactive power output by the photovoltaic inverter. Herein, the power and the voltage (or the current) that are output by the inverter circuit, or the corresponding adjustment amounts may be a vector value obtained by combining a component on each coordinate axis of the coordinate system (for example, the abc coordinate system, the xyz coordinate system, or the dq coordinate system), or may be a component value on each coordinate axis obtained by transforming and decomposing the coordinate system (for example, the abc coordinate system or the xyz coordinate system is transformed into the dq coordinate system). For example, the active voltage output by the inverter circuit may be a q-axis component value in the dq coordinate system, and the reactive voltage may be a d-axis component value in the dq coordinate system.

According to this application, the photovoltaic inverter may separately obtain an active power adjustment amount and/or a reactive power adjustment amount of the inverter circuit based on an application scenario, and control the output voltage of the inverter circuit to be the target voltage value based on the active power adjustment amount and/or the reactive power adjustment amount, to separately perform current limiting on the active current and the reactive current at the grid-connected point. This maintains system stability, and improves system security. Response is quick, the control method is simple, and applicability is high.

With reference to the first aspect, in a first possible implementation, the control circuit herein may obtain the active power adjustment amount and/or the reactive power adjustment amount based on the current value of the grid-connected point, the current amplitude limiting value, and the voltage value of the grid-connected point; and obtain the active voltage adjustment amount and/or the reactive voltage adjustment amount based on the active power adjustment amount and/or the reactive power adjustment amount. The control circuit herein may control the output voltage of the inverter circuit to be the target voltage value based on the active voltage adjustment amount and/or the reactive voltage adjustment amount. It may be understood that the control circuit herein may include a synchronization module and a control module. The synchronization module may be connected to the inverter circuit by using the control module. Each of the synchronization module and the control module is only a module that can implement a corresponding function in the control circuit. In a specific implementation process, the module that implements the corresponding function may be integrated into another function module or control circuit. The control circuit herein may obtain the output power (including the active power and/or the reactive power) of the inverter circuit based on the current value of the grid-connected point and the voltage value of the grid-connected point, obtain the reduced output power of the inverter circuit (that is, the output power of the inverter circuit that can perform current limiting, including the active power and/or the reactive power) based on the current amplitude limiting value and the voltage value of the grid-connected point, obtain the power adjustment amount (including the active power adjustment amount and/or the reactive power adjustment amount) of the inverter circuit through calculation (for example, by using a difference between the output power of the inverter circuit and the reduced output power of the inverter circuit), and obtain the voltage adjustment amount (including the active voltage adjustment amount and/or the reactive voltage adjustment amount) based on the power adjustment amount. Further, the control circuit may control the output voltage of the inverter circuit to be the target voltage value based on the active voltage adjustment amount and/or the reactive voltage adjustment amount, to reduce the current value of the grid-connected point by reducing the active power and/or the reactive power output by the photovoltaic inverter. Herein, the power and the voltage (or the current) that are output by the inverter circuit, or the corresponding adjustment amounts may be the vector value obtained by combining the component on each coordinate axis of the coordinate system (for example, the abc coordinate system, the xyz coordinate system, or the dq coordinate system), or may be the component value on each coordinate axis obtained by transforming and decomposing the coordinate system (for example, the abc coordinate system or the xyz coordinate system is transformed into the dq coordinate system). For example, the adjustment amount of the active voltage output by the inverter circuit may be a q-axis component value in the dq coordinate system, and the adjustment amount of the reactive voltage may be a d-axis component value in the dq coordinate system.

According to this application, the photovoltaic inverter may separately obtain the active power adjustment amount and/or the reactive power adjustment amount of the inverter circuit based on an application scenario, obtain the active voltage adjustment amount and/or the reactive voltage adjustment amount of the inverter circuit based on the active power adjustment amount and/or the reactive power adjustment amount, and further control the output voltage of the inverter circuit to be the target voltage value based on the active voltage adjustment amount and/or the reactive voltage adjustment amount, to separately perform current limiting on the active current and the reactive current at the grid-connected point. This maintains system stability, and improves system security. Response is quick, the control method is simple, and applicability is high.

With reference to the first possible implementation of the first aspect, in a second possible implementation, the control module herein includes a voltage control unit and a current control unit, and the voltage control unit is connected to the inverter circuit by using the current control unit. The control circuit herein may obtain an active current control amount and/or a reactive current control amount based on the active voltage adjustment amount and/or the reactive voltage adjustment amount. The control circuit herein may control the output voltage of the inverter circuit to be the target voltage value based on the active current control amount and/or the reactive current control amount. It may be understood that the control module in the control circuit herein may include the voltage control unit and the current control unit. The voltage control unit is connected to the inverter circuit by using the current control unit. Each of the voltage control unit and the current control unit is only a unit that can implement a corresponding function in the control circuit. In a specific implementation process, the unit that implements the corresponding function may be integrated into another functional module or control circuit. The voltage control unit herein may be a voltage control loop (for example, a voltage loop). The voltage control unit herein may adjust the output current control amount (including the active current control amount and/or the reactive current control amount) based on the voltage adjustment amount (including the active voltage adjustment amount and/or the reactive voltage adjustment amount). Herein, the voltage adjustment amount or the current control amount in the control module may be a vector value obtained by combining a component on each coordinate axis of the coordinate system (for example, the abc coordinate system, the xyz coordinate system, or the dq coordinate system), or may be a component value on each coordinate axis obtained by transforming and decomposing the coordinate system (for example, the abc coordinate system or the xyz coordinate system is transformed into the dq coordinate system). For example, the control amount of the active current output by the inverter circuit may be a q-axis component value in the dq coordinate system, and the control amount of the reactive current may be a d-axis component value in the dq coordinate system. The current control unit herein may be a current control loop (for example, a current loop). The current control unit herein may control the output voltage of the inverter circuit to be the target voltage value based on the active current control amount and/or the reactive current control amount.

According to this application, the photovoltaic inverter may respectively obtain the active current control amount and/or the reactive current control amount through adjustment based on the active power adjustment amount and/or the reactive power adjustment amount based on an application scenario, and control the output voltage of the inverter circuit to be the target voltage value based on the active current control amount and/or the reactive current control amount, to separately perform current limiting on the active current and the reactive current at the grid-connected point. This maintains system stability, and improves system security. Response is quick, the control method is simple, and applicability is high.

With reference to the second possible implementation of the first aspect, in a third possible implementation, the control circuit herein may obtain an amplitude-limited active current control amount and/or an amplitude-limited reactive current control amount based on the active current control amount and/or the reactive current control amount and the current amplitude limiting value. The control circuit herein may further control the output voltage of the inverter circuit to be the target voltage value based on the amplitude-limited active current control amount and/or the amplitude-limited reactive current control amount. It may be understood that the control module in the control circuit herein may further include a current amplitude limiting unit. The current amplitude limiting unit is connected to both the voltage control unit and the current control unit. The current amplitude limiting unit is also only a unit that can implement a corresponding function in the control circuit. In a specific implementation process, the unit that implements the corresponding function may be integrated into another functional module or control circuit. In some application scenarios in which fast current limiting needs to be performed, the photovoltaic inverter may further include a current amplitude limiting unit. The current amplitude limiting unit herein may obtain the amplitude-limited active current control amount and/or the amplitude-limited reactive current control amount based on the active current control amount and/or the reactive current control amount and the current amplitude limiting value. For example, when the current control amount (including the active current control amount and/or the reactive current control amount) is greater than the current amplitude limiting value (including an active component corresponding to the current amplitude limiting value and/or a reactive component corresponding to the current amplitude limiting value), the current amplitude limiting unit may perform amplitude limiting on the current control amount, to obtain the amplitude-limited current control amount (including the amplitude-limited active current control amount and/or the amplitude-limited reactive current control amount). The amplitude-limited active current control amount (and/or the amplitude-limited reactive current control amount) herein is less than or equal to the active component (and/or the reactive component) corresponding to the current amplitude limiting value. Further, the current control unit may control the output voltage of the inverter circuit to be the target voltage value based on the amplitude-limited current control amount (including the active current control amount and/or the reactive current control amount). Herein, the current amplitude limiting value or the current control amount in the control circuit may be a vector value obtained by combining a component on each coordinate axis of the coordinate system (for example, the abc coordinate system, the xyz coordinate system, or the dq coordinate system), or may be a component value on each coordinate axis obtained by transforming and decomposing the coordinate system (for example, the abc coordinate system or the xyz coordinate system is transformed into the dq coordinate system). For example, the control amount of the active current output by the inverter circuit may be a q-axis component value in the dq coordinate system, and the control amount of the reactive current may be a d-axis component value in the dq coordinate system.

According to this application, the current amplitude limiting unit may perform amplitude limiting on the current control amount, so that the amplitude-limited active current control amount (and/or the amplitude-limited reactive current control amount) is less than or equal to the active component (and/or the reactive component) corresponding to the current amplitude limiting value. This shortens current limiting response time and improves control efficiency. With reference to the third possible implementation of the first aspect, in a fourth possible implementation, the control circuit may further obtain an active current feedback amount and/or a reactive current feedback amount based on the active current control amount and/or the reactive current control amount and the amplitude-limited active current control amount and/or the amplitude-limited reactive current control amount. The control circuit herein may further obtain an active voltage feedback adjustment amount and/or a reactive voltage feedback adjustment amount based on the active current feedback amount and/or the reactive current feedback amount. The control circuit herein may further obtain the active current control amount and/or the reactive current control amount based on the active voltage adjustment amount and/or the reactive voltage adjustment amount and the active voltage feedback adjustment amount and/or the reactive voltage feedback adjustment amount. It may be understood that, after performing amplitude limiting on the current control amount, the current amplitude limiting unit may further obtain the output current feedback amount (including the active current feedback amount and/or the reactive current feedback amount) through calculation (for example, obtain a difference by subtracting the amplitude-limited current control amount from the amplitude-unlimited current control amount) based on the amplitude-unlimited current control amount (including the active current control amount and/or the reactive current control amount) and the amplitude-limited current control amount (including the active current control amount and/or the reactive current control amount), and output the current feedback amount to the synchronization module. The synchronization module may output the voltage feedback adjustment amount (including the active voltage feedback adjustment amount and/or the reactive voltage feedback adjustment amount) to the voltage control unit based on the current feedback amount. Further, the voltage control unit may adjust the output current control amount (including the active current control amount and/or the reactive current control amount) based on the voltage adjustment amount (including the active voltage adjustment amount and/or the reactive voltage adjustment amount) and the voltage feedback adjustment amount (including the active voltage feedback adjustment amount and/or the reactive voltage feedback adjustment amount). Herein, the voltage feedback adjustment amount (or the current feedback amount), the voltage adjustment amount, or the current control amount in the control module may be a vector value obtained by combining a component on each coordinate axis of the coordinate system (for example, the abc coordinate system, the xyz coordinate system, or the dq coordinate system), or may be a component value on each coordinate axis obtained by transforming and decomposing the coordinate system (for example, the abc coordinate system or the xyz coordinate system is transformed into the dq coordinate system). For example, the control amount of the active current output by the inverter circuit may be a q-axis component value in the dq coordinate system, and the control amount of the reactive current may be a d-axis component value in the dq coordinate system.

According to this application, the current amplitude limiting unit may feed back, to the synchronization module, the difference between the amplitude-limited current control amount and the amplitude-unlimited current control amount as the current feedback amount. The synchronization module may output a voltage feedback adjustment amount to the voltage control unit based on the current feedback amount. The voltage control unit may adjust the output current control amount based on the voltage adjustment amount and the voltage feedback adjustment amount. This shortens current limiting response time, improves system stability, and improves system control efficiency and power supply efficiency.

With reference to the fourth possible implementation of the first aspect, in a fifth possible implementation, the control circuit herein may further obtain the active power feedback adjustment amount and/or the reactive power feedback adjustment amount based on the active current feedback amount and/or the reactive current feedback amount. The control circuit herein may further output a power angle feedback adjustment amount of the voltage based on the active power feedback adjustment amount, and obtain the active voltage feedback adjustment amount based on the power angle feedback adjustment amount of the output voltage, and/or obtain the reactive voltage feedback adjustment amount based on the reactive power feedback adjustment amount. It may be understood that, similar to a principle of obtaining the power adjustment amount based on the current amplitude limiting value, the current value of the grid-connected point, and the voltage value of the grid-connected point, the synchronization module herein may obtain the power feedback adjustment amount (including the active power feedback adjustment amount and/or the reactive power feedback adjustment amount) through calculation based on the current feedback amount (including the active current feedback amount and/or the reactive power current feedback amount) and the output voltage value of the grid-connected point (or a load impedance value obtained through calculation or another system parameter). The synchronization module herein may obtain the power angle feedback adjustment amount of the output voltage (for example, a variation of an angle between the output voltage of the inverter circuit and the voltage of the grid-connected point in the dq coordinate system) based on the active power feedback adjustment amount, and obtain an active voltage feedback adjustment amount (for example, a variation of a q-axis component of the output voltage of the inverter circuit in the dq coordinate system) based on the power angle feedback adjustment amount of the output voltage. The synchronization module may further obtain the reactive voltage feedback adjustment amount (for example, a variation of a d-axis component of the output voltage of the inverter circuit in the dq coordinate system) based on the reactive power feedback adjustment amount. The synchronization module herein may quickly output the voltage feedback adjustment amount to the voltage control module based on the current feedback amount. The control method is simple, response duration is shortened, and system control efficiency and power supply efficiency are improved.

With reference to any one of the first aspect or the possible implementations of the first aspect, in a sixth possible implementation, the control circuit herein may further obtain an angular frequency adjustment amount based on the current value of the grid-connected point, the current amplitude limiting value, and the voltage value of the grid-connected point. The control circuit herein may further adjust a phase of the output voltage of the inverter circuit to a target phase based on the angular frequency adjustment amount. It may be understood that the control module herein may further include a phase control unit. The phase control unit is connected to the inverter circuit by using the synchronization module. The phase control unit is only a unit that can implement a corresponding function in the control circuit. In a specific implementation process, the unit that implements the corresponding function may be integrated into another functional module or control circuit. Herein, because a voltage phase of the grid-connected point in the power supply system is always in a changing state, the synchronization module may obtain the angular frequency adjustment amount based on the current value of the grid-connected point, the current amplitude limiting value, and the voltage value of the grid-connected point, and then adjust the phase of the output voltage of the inverter circuit to the target phase by using the phase control unit. This enhances system synchronization.

According to a second aspect, this application provides a power supply system. The power supply system may include the photovoltaic inverter according to any one of the first aspect or the possible implementations of the first aspect. The power supply system further includes a power supply. Two ends of the photovoltaic inverter are respectively connected to a direct current power supply and a load.

With reference to the second aspect, in a first possible implementation, the power supply system may further include a transformer, and the power supply may be connected to the photovoltaic inverter by using the transformer.

With reference to the first possible implementation of the second aspect, in a second possible implementation, the power supply system may further include a combiner box, and the transformer may be connected to the photovoltaic inverter by using the combiner box.

With reference to the second possible implementation of the second aspect, in a third possible implementation, the power supply system may further include a direct current bus. The transformer may be connected to the direct current bus by using the combiner box. The direct current bus is connected to the photovoltaic inverter.

With reference to the third possible implementation of the second aspect, in a fourth possible implementation, the power supply system may further include an on-grid and off-grid wiring apparatus. The photovoltaic inverter may be connected to the load by using the on-grid and off-grid wiring apparatus.

In this application, the functional modules in the power supply system have various and flexible composition manners, and can adapt to different power supply environments. This improves diversity of application scenarios of the power supply system and enhances adaptability of the power supply system.

According to a third aspect, this application provides a grid-connected control method for a photovoltaic inverter. The grid-connected control method is applicable to the photovoltaic inverter. The photovoltaic inverter includes a control circuit and an inverter circuit. One end of the inverter circuit is connected to a direct current power supply, and the other end of the inverter circuit is connected to a power grid at a grid-connected point by using power grid impedance. The control circuit is connected to the inverter circuit. The method is further applicable to the photovoltaic inverter in any one of the first aspect or the possible implementations of the first aspect. The method includes: detecting a current value of the grid-connected point. When the current value of the grid-connected point is greater than or equal to a current amplitude limiting value, an active voltage adjustment amount and/or a reactive voltage adjustment amount is obtained based on the current value of the grid-connected point, the current amplitude limiting value, and a voltage value of the grid-connected point. An output voltage of the inverter circuit is controlled to be a target voltage value based on the active voltage adjustment amount and/or the reactive voltage adjustment amount, to reduce the current value of the grid-connected point by reducing active power and/or reactive power output by the photovoltaic inverter. A voltage value of a target voltage herein is the target voltage value.

In this application, the photovoltaic inverter may obtain the output current value of the grid-connected point (for example, in a manner of obtaining, collecting, receiving, detecting, or storing). The output current value of the grid-connected point herein may be directly collected or detected, or may be obtained through calculation by using another current value that is easy to collect or obtain. For example, the output current value is obtained through calculation by using an output current value of the inverter circuit, or may be obtained through calculation by using an output current value at a connection point between the photovoltaic inverter and the power grid impedance, or may be obtained through calculation by using an output current value at another sampling point, which may be specifically set based on an application scenario. It may be understood that, in different application scenarios (for example, the photovoltaic inverter is equivalent to a voltage source in a grid forming scenario), after the inverter circuit outputs a relatively constant output voltage, an output power and an output current of the inverter circuit may change relative to a change in the load. For example, when the load increases, the output power and the output current of the inverter circuit increase correspondingly, to ensure normal power supply to the load. In some application scenarios, to avoid overvoltage or overheating of a component in a power supply system, short-term transient current limiting or long-term steady current limiting needs to be performed on the power supply system. When a current value of the grid-connected point is greater than or equal to a current amplitude limiting value, the photovoltaic inverter herein may obtain an active voltage adjustment amount and/or a reactive voltage adjustment amount based on the current value of the grid-connected point, the current amplitude limiting value, and a voltage value of the grid-connected point, and control an output voltage of the inverter circuit to be a target voltage value based on the active voltage adjustment amount and/or the reactive voltage adjustment amount, to reduce the current value of the grid-connected point by reducing active power and/or reactive power output by the photovoltaic inverter. The current amplitude limiting value herein may be a current amplitude limiting value obtained by the photovoltaic inverter (for example, in a manner of obtaining, receiving, calculating, or storing). The current amplitude limiting value herein may be a current value, or may be a plurality of current values, or may be one current interval formed by a plurality of current values, or may be a plurality of current intervals formed by a plurality of current values. The current amplitude limiting value herein may be a vector value obtained by combining a component on each coordinate axis of a coordinate system (for example, an abc coordinate system, an xyz coordinate system, or a dq coordinate system), or may be a component value on each coordinate axis obtained by transforming and decomposing a coordinate system (for example, an abc coordinate system or an xyz coordinate system is transformed into a dq coordinate system). For example, in an application scenario of grid-connected operation, when a power grid is faulty (for example, a dip occurs in the power grid), a current output by the inverter current needs a relatively large reactive component to maintain a power grid voltage. In this case, if current limiting is performed on a power supply system, current limiting needs to be preferentially performed on an active current (for example, a q-axis current component in the dq coordinate system) output by the inverter circuit. Similarly, for example, in an application scenario in which an electric energy yield needs to be preferentially met, if current limiting is performed on the power supply system, current limiting needs to be preferentially performed on a reactive current (for example, a d-axis current component in the dq coordinate system) output by the inverter circuit. Correspondingly, the photovoltaic inverter may obtain the output power (including the active power and/or the reactive power) of the inverter circuit based on the current value of the grid-connected point and the voltage value of the grid-connected point, obtain reduced output power of the inverter circuit (that is, output power of the inverter circuit that can perform current limiting, including the active power and/or the reactive power) based on the current amplitude limiting value and the voltage value of the grid-connected point, further obtain the voltage adjustment amount (including the active voltage adjustment amount and/or the reactive voltage adjustment amount), and control an output voltage of the inverter circuit to be a target voltage value based on the active voltage adjustment amount and/or the reactive voltage adjustment amount, to reduce the current value of the grid-connected point by reducing active power and/or reactive power output by the photovoltaic inverter. Herein, the power and the voltage (or the current) that are output by the inverter circuit, or the corresponding adjustment amounts may be a vector value obtained by combining a component on each coordinate axis of the coordinate system (for example, the abc coordinate system, the xyz coordinate system, or the dq coordinate system), or may be a component value on each coordinate axis obtained by transforming and decomposing the coordinate system (for example, the abc coordinate system or the xyz coordinate system is transformed into the dq coordinate system). For example, the active voltage output by the inverter circuit may be a q-axis component value in the dq coordinate system, and the reactive voltage may be a d-axis component value in the dq coordinate system.

According to this application, the photovoltaic inverter may separately obtain an active power adjustment amount and/or a reactive power adjustment amount of the inverter circuit based on an application scenario, and control the output voltage of the inverter circuit to be the target voltage value based on the active power adjustment amount and/or the reactive power adjustment amount, to separately perform current limiting on the active current and the reactive current at the grid-connected point. This maintains system stability, and improves system security. Response is quick, the control method is simple, and applicability is high.

With reference to the third aspect, in a first possible implementation, the obtaining an active voltage adjustment amount and/or a reactive voltage adjustment amount based on the current value of the grid-connected point, the current amplitude limiting value, and a voltage value of the grid-connected point includes: obtaining an active power adjustment amount and/or a reactive power adjustment amount based on the current value of the grid-connected point, the current amplitude limiting value, and the voltage value of the grid-connected point; and obtaining the active voltage adjustment amount and/or the reactive voltage adjustment amount based on the active power adjustment amount and/or the reactive power adjustment amount. It may be understood that, the photovoltaic inverter herein may obtain the output power (including the active power and/or the reactive power) of the inverter circuit based on the current value of the grid-connected point and the voltage value of the grid-connected point, obtain the reduced output power of the inverter circuit (that is, the output power of the inverter circuit that can perform current limiting, including the active power and/or the reactive power) based on the current amplitude limiting value and the voltage value of the grid-connected point, obtain the power adjustment amount (including the active power adjustment amount and/or the reactive power adjustment amount) of the inverter circuit through calculation (for example, by using a difference between the output power of the inverter circuit and the reduced output power of the inverter circuit), and obtain the voltage adjustment amount (including the active voltage adjustment amount and/or the reactive voltage adjustment amount) based on the power adjustment amount. Further, the photovoltaic inverter may control the output voltage of the inverter circuit to be the target voltage value based on the active voltage adjustment amount and/or the reactive voltage adjustment amount, to reduce the current value of the grid-connected point by reducing the active power and/or the reactive power output by the photovoltaic inverter. Herein, the power and the voltage (or the current) that are output by the inverter circuit, or the corresponding adjustment amounts may be a vector value obtained by combining a component on each coordinate axis of the coordinate system (for example, the abc coordinate system, the xyz coordinate system, or the dq coordinate system), or may be a component value on each coordinate axis obtained by transforming and decomposing the coordinate system (for example, the abc coordinate system or the xyz coordinate system is transformed into the dq coordinate system). For example, the adjustment amount of the active voltage output by the inverter circuit may be a q-axis component value in the dq coordinate system, and the adjustment amount of the reactive voltage may be a d-axis component value in the dq coordinate system.

According to this application, the photovoltaic inverter may separately obtain the active power adjustment amount and/or the reactive power adjustment amount of the inverter circuit based on an application scenario, obtain the active voltage adjustment amount and/or the reactive voltage adjustment amount of the inverter circuit based on the active power adjustment amount and/or the reactive power adjustment amount, and further control the output voltage of the inverter circuit to be the target voltage value based on the active voltage adjustment amount and/or the reactive voltage adjustment amount, to separately perform current limiting on the active current and the reactive current at the grid-connected point. This maintains system stability, and improves system security. Response is quick, the control method is simple, and applicability is high.

With reference to the first possible implementation of the third aspect, in a second possible implementation, the controlling an output voltage of the inverter circuit to be a target voltage value based on the active voltage adjustment amount and/or the reactive voltage adjustment amount includes: obtaining an active current control amount and/or a reactive current control amount based on the active voltage adjustment amount and/or the reactive voltage adjustment amount; and controlling the output voltage of the inverter circuit to be the target voltage value based on the active current control amount and/or the reactive current control amount. Herein, the voltage adjustment amount or the current control amount in the photovoltaic inverter may be a vector value obtained by combining a component on each coordinate axis of the coordinate system (for example, the abc coordinate system, the xyz coordinate system, or the dq coordinate system), or may be a component value on each coordinate axis obtained by transforming and decomposing the coordinate system (for example, the abc coordinate system or the xyz coordinate system is transformed into the dq coordinate system). For example, the control amount of the active current output by the inverter circuit may be a q-axis component value in the dq coordinate system, and the control amount of the reactive current may be a d-axis component value in the dq coordinate system. The photovoltaic inverter herein may control the output voltage of the inverter circuit to be the target voltage value based on the active current control amount and/or the reactive current control amount.

According to this application, the photovoltaic inverter may respectively obtain the active current control amount and/or the reactive current control amount through adjustment based on the active power adjustment amount and/or the reactive power adjustment amount based on an application scenario, and control the output voltage of the inverter circuit to be the target voltage value based on the active current control amount and/or the reactive current control amount, to separately perform current limiting on the active current and the reactive current at the grid-connected point. This maintains system stability, and improves system security. Response is quick, the control method is simple, and applicability is high.

With reference to the second possible implementation of the third aspect, in a third possible implementation, the photovoltaic inverter further includes a current amplitude limiting unit. After the obtaining an active current control amount and/or a reactive current control amount based on the active voltage adjustment amount and/or the reactive voltage adjustment amount, the method further includes: obtaining an amplitude-limited active current control amount and/or an amplitude-limited reactive current control amount based on the active current control amount and/or the reactive current control amount and the current amplitude limiting value; and controlling the output voltage of the inverter circuit to be the target voltage value based on the amplitude-limited active current control amount and/or the amplitude-limited reactive current control amount. It may be understood that, the photovoltaic inverter herein may obtain the amplitude-limited active current control amount and/or the amplitude-limited reactive current control amount based on the active current control amount and/or the reactive current control amount and the current amplitude limiting value. For example, when the current control amount (including the active current control amount and/or the reactive current control amount) is greater than the current amplitude limiting value (including an active component corresponding to the current amplitude limiting value and/or a reactive component corresponding to the current amplitude limiting value), the current amplitude limiting unit may perform amplitude limiting on the current control amount, to obtain the amplitude-limited current control amount (including the amplitude-limited active current control amount and/or the amplitude-limited reactive current control amount). The amplitude-limited active current control amount (and/or the amplitude-limited reactive current control amount) herein is less than or equal to the active component (and/or the reactive component) corresponding to the current amplitude limiting value. Further, the photovoltaic inverter may control the output voltage of the inverter circuit to be the target voltage value based on the amplitude-limited current control amount (including the active current control amount and/or the reactive current control amount). Herein, the current amplitude limiting value or the current control amount in the photovoltaic inverter may be a vector value obtained by combining a component on each coordinate axis of the coordinate system (for example, the abc coordinate system, the xyz coordinate system, or the dq coordinate system), or may be a component value on each coordinate axis obtained by transforming and decomposing the coordinate system (for example, the abc coordinate system or the xyz coordinate system is transformed into the dq coordinate system). For example, the control amount of the active current output by the inverter circuit may be a q-axis component value in the dq coordinate system, and the control amount of the reactive current may be a d-axis component value in the dq coordinate system. According to this application, the photovoltaic inverter may perform amplitude limiting on the current control amount, so that the amplitude-limited active current control amount (and/or the amplitude-limited reactive current control amount) is less than or equal to the active component (and/or the reactive component) corresponding to the current amplitude limiting value. This shortens current limiting response time and improves control efficiency.

With reference to the third possible implementation of the third aspect, in a fourth possible implementation, after the obtaining an amplitude-limited active current control amount and/or an amplitude-limited reactive current control amount based on the active current control amount and/or the reactive current control amount and the current amplitude limiting value, the method further includes: obtaining an active current feedback amount and/or a reactive current feedback amount based on the active current control amount and/or the reactive current control amount and the amplitude-limited active current control amount and/or the amplitude-limited reactive current control amount; obtaining an active voltage feedback adjustment amount and/or a reactive voltage feedback adjustment amount based on the active current feedback amount and/or the reactive current feedback amount; and obtaining the active current control amount and/or the reactive current control amount based on the active voltage adjustment amount and/or the reactive voltage adjustment amount and the active voltage feedback adjustment amount and/or the reactive voltage feedback adjustment amount. It may be understood that, after performing amplitude limiting on the current control amount, the photovoltaic inverter may further obtain the output current feedback amount (including the active current feedback amount and/or the reactive current feedback amount) through calculation (for example, obtain a difference by subtracting the amplitude-limited current control amount from the amplitude-unlimited current control amount) based on the amplitude-unlimited current control amount (including the active current control amount and/or the reactive current control amount) and the amplitude-limited current control amount (including the active current control amount and/or the reactive current control amount). The photovoltaic inverter may output the voltage feedback adjustment amount (including the active voltage feedback adjustment amount and/or the reactive voltage feedback adjustment amount) to the voltage control unit based on the current feedback amount. Further, the voltage control unit may adjust the output current control amount (including the active current control amount and/or the reactive current control amount) based on the voltage adjustment amount (including the active voltage adjustment amount and/or the reactive voltage adjustment amount) and the voltage feedback adjustment amount (including the active voltage feedback adjustment amount and/or the reactive voltage feedback adjustment amount). Herein, the voltage feedback adjustment amount (or the current feedback amount), the voltage adjustment amount, or the current control amount in the control module may be a vector value obtained by combining a component on each coordinate axis of the coordinate system (for example, the abc coordinate system, the xyz coordinate system, or the dq coordinate system), or may be a component value on each coordinate axis obtained by transforming and decomposing the coordinate system (for example, the abc coordinate system or the xyz coordinate system is transformed into the dq coordinate system). For example, the control amount of the active current output by the inverter circuit may be a q-axis component value in the dq coordinate system, and the control amount of the reactive current may be a d-axis component value in the dq coordinate system.

According to this application, the photovoltaic inverter may feed back the difference between the amplitude-limited current control amount and the amplitude-unlimited current control amount as the current feedback amount. The photovoltaic inverter may output a voltage feedback adjustment amount to the voltage control unit based on the current feedback amount. The photovoltaic inverter may adjust the output current control amount based on the voltage adjustment amount and the voltage feedback adjustment amount. This shortens current limiting response time, improves system stability, and improves system control efficiency and power supply efficiency.

With reference to the fourth possible implementation of the third aspect, in a fifth possible implementation, the obtaining an active voltage feedback adjustment amount and/or a reactive voltage feedback adjustment amount based on the active current feedback amount and/or the reactive current feedback amount includes: obtaining an active power feedback adjustment amount and/or a reactive power feedback adjustment amount based on the active current feedback amount and/or the reactive current feedback amount; outputting a power angle feedback adjustment amount of the voltage based on the active power feedback adjustment amount, and obtaining the active voltage feedback adjustment amount based on the power angle feedback adjustment amount of the output voltage; and/or obtaining the reactive voltage feedback adjustment amount based on the reactive power feedback adjustment amount. It may be understood that, similar to a principle of obtaining the power adjustment amount based on the current amplitude limiting value, the current value of the grid-connected point, and the voltage value of the grid-connected point, the photovoltaic inverter herein may obtain the power feedback adjustment amount (including the active power feedback adjustment amount and/or the reactive power feedback adjustment amount) through calculation based on the current feedback amount (including the active current feedback amount and/or the reactive power current feedback amount) and the output voltage value of the grid-connected point (or a load impedance value obtained through calculation or another system parameter). The photovoltaic inverter herein may obtain the power angle feedback adjustment amount of the output voltage (for example, a variation of an angle between the output voltage of the inverter circuit and the voltage of the grid-connected point in the dq coordinate system) based on the active power feedback adjustment amount, and obtain an active voltage feedback adjustment amount (for example, a variation of a q-axis component of the output voltage of the inverter circuit in the dq coordinate system) based on the power angle feedback adjustment amount of the output voltage. The photovoltaic inverter may further obtain the reactive voltage feedback adjustment amount (for example, a variation of a d-axis component of the output voltage of the inverter circuit in the dq coordinate system) based on the reactive power feedback adjustment amount. The photovoltaic inverter herein may quickly output the voltage feedback adjustment amount to the voltage control module based on the current feedback amount. The control method is simple, response duration is shortened, and system control efficiency and power supply efficiency are improved.

With reference to any one of the third aspect or the possible implementations of the third aspect, in a sixth possible implementation, after the detecting a current value of the grid-connected point, the method further includes: obtaining an angular frequency adjustment amount based on the current value of the grid-connected point, the current amplitude limiting value, and the voltage value of the grid-connected point; and adjusting a phase of the output voltage of the inverter circuit to a target phase based on the angular frequency adjustment amount. The phase control unit herein may adjust a phase of the target voltage output by the inverter circuit to a target phase based on the angular frequency adjustment amount. Herein, because a voltage phase of the grid-connected point in the power supply system is always in a changing state, the photovoltaic inverter may obtain the angular frequency adjustment amount based on the current value of the grid-connected point, the current amplitude limiting value, and the voltage value of the grid-connected point, and then adjust the phase of the output voltage of the inverter circuit to the target phase by using the phase control unit. This enhances system synchronization.

### BRIEF DESCRIPTION OF DRAWINGS

FIG. 1 is a schematic diagram of an application scenario of a grid-connected photovoltaic inverter according to an embodiment of this application;
FIG. 2 is a schematic diagram of a structure of a photovoltaic inverter according to an embodiment of this application;
FIG. 3 is another schematic diagram of a structure of a photovoltaic inverter according to an embodiment of this application;
FIG. 4 is another schematic diagram of a structure of a photovoltaic inverter according to an embodiment of this application;
FIG. 5 is a voltage control vector diagram according to an embodiment of this application;
FIG. 6 is a voltage control waveform diagram according to an embodiment of this application;
FIG. 7 is another schematic diagram of a structure of a photovoltaic inverter according to an embodiment of this application;
FIG. 8 is a schematic diagram of a structure of a power supply system according to an embodiment of this application;
FIG. 9 is a schematic flowchart of a grid-connected control method according to an embodiment of this application; and
FIG. 10 is another schematic flowchart of a grid-connected control method according to an embodiment of this application.

### DESCRIPTION OF EMBODIMENTS

A grid-connected photovoltaic inverter provided in this application may be applied to a plurality of application fields such as the field of new energy smart microgrids, the field of power transmission and distribution, the field of new energy (for example, the field of photovoltaic grid connection, the field of thermal power grid connection, or the field of or wind power grid connection), the field of photovoltaic power generation, the field of wind power generation, the field of thermal power generation, or the field of high-power converters (for example, converting a direct current into a high-power high-voltage alternating current). This may be specifically determined based on an actual application scenario, and is not limited herein. The photovoltaic inverter provided in this application may be applicable to a power supply system having different power generation apparatuses, such as a photovoltaic power system, a wind power system, a thermal power system, a chemical power system, or a biomass power system. This may be specifically determined based on an actual application scenario, and is not limited herein. The photovoltaic inverter provided in this application may be adapted to different application scenarios, for example, an application scenario in which power is supplied to a load in a photovoltaic storage system power supply environment, an application scenario in which power is supplied to a load in a wind storage power supply environment, an application scenario in which power is supplied to a load in a pure energy storage power supply environment, or another application scenario. The following uses an application scenario in which the power is supplied to the load in the pure energy storage power supply environment as an example for description. Details are not described below again.

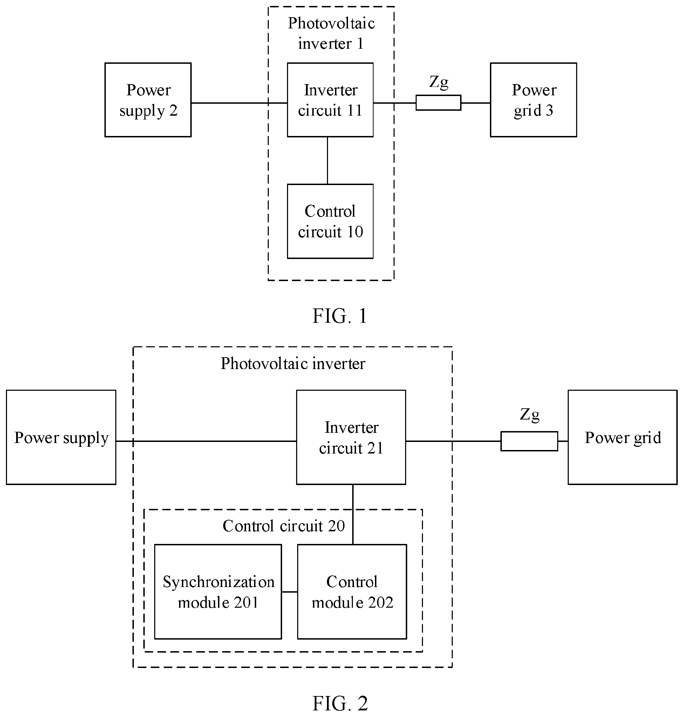

FIG. 1 is a schematic diagram of an application scenario of a grid-connected photovoltaic inverter according to an embodiment of this application. In an application scenario of pure energy storage power supply, as shown in FIG. 1, the photovoltaic inverter 1 is applicable to a power supply system, and the power supply system includes a photovoltaic inverter 1, a power supply 2, power grid impedance Zg, and a power grid 3. Herein, one end of the photovoltaic inverter 1 is connected to the power supply 2 (namely, a direct current power supply), and the other end of the photovoltaic inverter 1 is connected to a power grid 3 at a grid-connected point by using power grid impedance Zg. The power supply 2 may supply power to the power grid 3 by using the photovoltaic inverter 1. In some feasible implementations, the power supply 2 may also be used as an energy storage apparatus. When power is adequate, the power supply 2 may obtain, by using the photovoltaic inverter 1, electric energy provided by the power grid 3 for storage. This application uses only an application scenario in which the power supply 2 supplies power to the power grid 3 by using the photovoltaic inverter 1 as an example for description. Details are not described below again. It can be understood that, the power supply 2 provided in this application is applicable to application scenarios of supplying power to a plurality of types of electric devices, such as a base station device in an area without mains power or in an area with relatively poor mains power, or a battery, or a home device (such as a refrigerator or an air conditioner). This may be determined based on an actual application scenario, and is not limited herein. It can be further understood that the power grid 3 in FIG. 1 may include an electric device such as a transmission line, a power transfer station, a battery, a communication base station, or a home device, or a power transmission device. Herein, the photovoltaic inverter 1 may include an inverter circuit 11 and a control circuit 10. One end of the inverter circuit 11 may be connected to the direct current power supply, the other end of the inverter circuit 11 may be connected to the power grid 3 at the grid-connected point by using the power grid impedance Zg, and the control circuit 10 may be connected to the inverter circuit 11. In some feasible implementations, the photovoltaic inverter further includes a direct current DC-DC conversion unit, which may convert an input voltage of the inverter into a voltage that matches the inverter circuit 11 and output the voltage to the inverter circuit. This may be specifically determined based on an actual application scenario, and is not limited herein.

In different application scenarios (for example, the photovoltaic inverter 1 is equivalent to a voltage source in a grid forming scenario), after the inverter circuit 11 outputs a relatively constant output voltage, an output power and an output current of the inverter circuit 11 may change relative to a change in a load on the power grid side 3. For example, when the load increases, the output power and the output current of the inverter circuit 11 increase correspondingly, to ensure normal power supply to the load. In some feasible implementations, the control circuit 10 may obtain the output current value of the grid-connected point (for example, in a manner of obtaining, collecting, receiving, detecting, or storing). The output current value of the grid-connected point herein may be directly collected or detected, or may be obtained through calculation by using another current value that is easy to collect or obtain. For example, the output current value is obtained through calculation by using an output current value of the inverter circuit 11, or may be obtained through calculation by using an output current value at a connection point between the photovoltaic inverter 1 and the impedance of the power grid 3, or may be obtained through calculation by using an output current value at another sampling point, which may be specifically set based on an application scenario. When a current value of the grid-connected point is greater than or equal to a current amplitude limiting value, the control circuit 10 herein may obtain an active voltage adjustment amount and/or a reactive voltage adjustment amount based on the current value of the grid-connected point, the current amplitude limiting value, and a voltage value of the grid-connected point, and control an output voltage of the inverter circuit 11 to be a target voltage value based on the active voltage adjustment amount and/or the reactive voltage adjustment amount, to reduce the current value of the grid-connected point by reducing active power and/or reactive power output by the photovoltaic inverter 1. The current amplitude limiting value herein may be a current amplitude limiting value obtained by the control circuit 10 (for example, in a manner of obtaining, receiving, calculating, or storing). The current amplitude limiting value herein may be a current value, or may be a plurality of current values, or may be one current interval formed by a plurality of current values, or may be a plurality of current intervals formed by a plurality of current values. The current amplitude limiting value herein may be a vector value obtained by combining a component on each coordinate axis of a coordinate system (for example, an abc coordinate system, an xyz coordinate system, or a dq coordinate system), or may be a component value on each coordinate axis obtained by transforming and decomposing a coordinate system (for example, an abc coordinate system or an xyz coordinate system is transformed into a dq coordinate system). For example, in an application scenario of grid-connected operation, when a power grid 3 is faulty (for example, a dip occurs in the power grid 3), a current output by the inverter current needs a relatively large reactive component to maintain a voltage of the power grid 3. In this case, if current limiting is performed on a power supply system, current limiting needs to be preferentially performed on an active current (for example, a q-axis current component in the dq coordinate system) output by the inverter circuit 11. Similarly, for example, in an application scenario in which an electric energy yield needs to be preferentially met, if current limiting is performed on the power supply system, current limiting needs to be preferentially performed on a reactive current (for example, a d-axis current component in the dq coordinate system) output by the inverter circuit 11. Correspondingly, the control circuit 10 may obtain the output power (including the active power and/or the reactive power) of the inverter circuit 11 based on the current value of the grid-connected point and the voltage value of the grid-connected point, obtain reduced output power of the inverter circuit 11 (that is, output power of the inverter circuit 11 that can perform current limiting, including the active power and/or the reactive power) based on the current amplitude limiting value and the voltage value of the grid-connected point, further obtain the voltage adjustment amount (including the active voltage adjustment amount and/or the reactive voltage adjustment amount), and control an output voltage of the inverter circuit 11 to be a target voltage value based on the active voltage adjustment amount and/or the reactive voltage adjustment amount, to reduce the current value of the grid-connected point by reducing active power and/or reactive power output by the photovoltaic inverter 1. Herein, the power and the voltage (or the current) that are output by the inverter circuit 11, or the corresponding adjustment amounts may be a vector value obtained by combining a component on each coordinate axis of the coordinate system (for example, the abc coordinate system, the xyz coordinate system, or the dq coordinate system), or may be a component value on each coordinate axis obtained by transforming and decomposing the coordinate system (for example, the abc coordinate system or the xyz coordinate system is transformed into the dq coordinate system). For example, the active voltage output by the inverter circuit 11 may be a q-axis component value in the dq coordinate system, and the reactive voltage may be a d-axis component value in the dq coordinate system.

According to this application, the photovoltaic inverter may separately obtain an active power adjustment amount and/or a reactive power adjustment amount of the inverter circuit based on an application scenario, and control the output voltage of the inverter circuit to be the target voltage value based on the active power adjustment amount and/or the reactive power adjustment amount, to separately perform current limiting on the active current and the reactive current at the grid-connected point. This maintains system stability, and improves system security. Response is quick, the control method is simple, and applicability is high.

With reference to FIG. 2 to FIG. 10, a photovoltaic power supply system provided in this application and an operating principle of the photovoltaic power supply system are described below by using examples.

FIG. 2 is a schematic diagram of a structure of a photovoltaic inverter according to an embodiment of this application. As shown in FIG. 2, the photovoltaic inverter includes an inverter circuit 21 and a control circuit 20. The control circuit 20 herein includes a synchronization module 201 and a control module 202. The synchronization module 201 herein may be connected to the inverter circuit 21 by using the control module 202. According to this application, each of the synchronization module 201 and the control module 202 is only a module that can implement a corresponding function in the control circuit. In a specific implementation process, the module that implements the corresponding function may be integrated into another function module or control circuit. Details are not described below again. The synchronization module 201 herein may obtain an active power adjustment amount Pref and/or a reactive power adjustment amount Qref based on a current value of a grid-connected point, a current amplitude limiting value, and a voltage value of the grid-connected point, and obtain an active voltage adjustment amount Uqref and/or a reactive voltage adjustment amount Udref based on the active power adjustment amount Pref and/or the reactive power adjustment amount Qref. The control module 202 herein may control an output voltage of the inverter circuit to be a target voltage value based on the active voltage adjustment amount Uqref and/or the reactive voltage adjustment amount Udref. It may be understood that, the control circuit 20 may obtain output power (including active power and/or reactive power) of the inverter circuit based on the current value of the grid-connected point and the voltage value of the grid-connected point, obtain the reduced output power of the inverter circuit (that is, the output power of the inverter circuit that can perform current limiting, including the active power and/or the reactive power) based on the current amplitude limiting value and the voltage value of the grid-connected point, obtain the power adjustment amount (including the active power adjustment amount Uqref and/or the reactive power adjustment amount Udref) of the inverter circuit through calculation (for example, by using a difference between the output power of the inverter circuit and the reduced output power of the inverter circuit), and obtain the voltage adjustment amount (including the active voltage adjustment amount Pref and/or the reactive voltage adjustment amount Qref) based on the power adjustment amount. Further, the control circuit 20 may control the output voltage of the inverter circuit to be the target voltage value based on the active voltage adjustment amount Uqref and/or the reactive voltage adjustment amount Udref, to reduce the current value of the grid-connected point by reducing the active power and/or the reactive power output by the photovoltaic inverter. Herein, the power and the voltage (or the current) that are output by the inverter circuit, or the corresponding adjustment amounts may be a vector value obtained by combining a component on each coordinate axis of the coordinate system (for example, the abc coordinate system, the xyz coordinate system, or the dq coordinate system), or may be a component value on each coordinate axis obtained by transforming and decomposing the coordinate system (for example, the abc coordinate system or the xyz coordinate system is transformed into the dq coordinate system). For example, the adjustment amount Uqref of the active voltage output by the inverter circuit may be a q-axis component value in the dq coordinate system, and the adjustment amount Udref of the reactive voltage may be a d-axis component value in the dq coordinate system.

According to this application, the photovoltaic inverter may separately obtain the active power adjustment amount Pref and/or the reactive power adjustment amount Qref of the inverter circuit based on an application scenario, obtain the active voltage adjustment amount Uqref and/or the reactive voltage adjustment amount Udref of the inverter circuit based on the active power adjustment amount Pref and/or the reactive power adjustment amount Qref, and further control the output voltage of the inverter circuit to be the target voltage value based on the active voltage adjustment amount Uqref and/or the reactive voltage adjustment amount Udref, to separately perform current limiting on the active current and the reactive current at the grid-connected point. This maintains system stability, and improves system security. Response is quick, the control method is simple, and applicability is high.

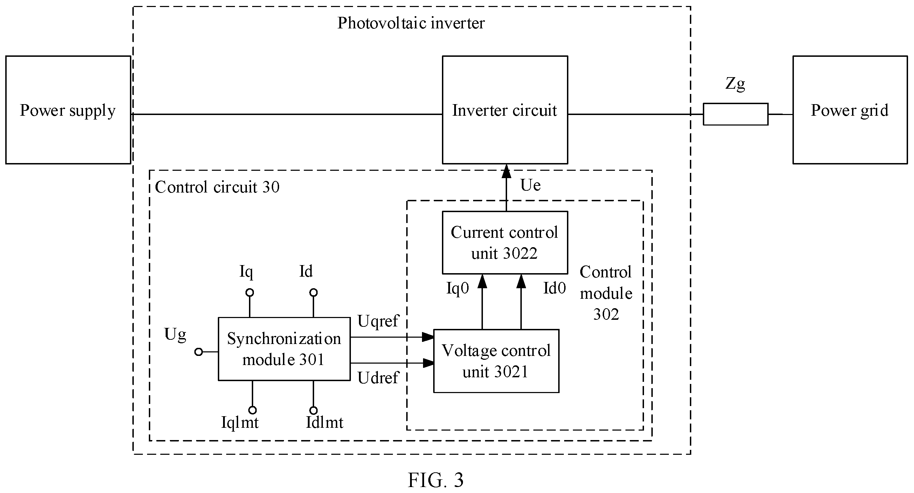

In some feasible implementations, the control module may include a voltage control unit and a current control unit. For details, FIG. 3 is another schematic diagram of a structure of a photovoltaic inverter according to an embodiment of this application. As shown in FIG. 3, a control module 302 in a control circuit 30 herein includes a voltage control unit 3021 and a current control unit 3022, and the voltage control unit 3021 is connected to an inverter circuit by using the current control unit 3022. In this application, Each of the voltage control unit 3021 and the current control unit 3022 is only a unit that can implement a corresponding function in the control circuit. In a specific implementation process, the unit that implements the corresponding function may be integrated into another functional module or control circuit. Details are not described below again. The synchronization module 301 herein may obtain an active power adjustment amount Pref and/or a reactive power adjustment amount Qref based on a current value of a grid-connected point (for example, Iq and Id in a dq coordinate system), a current amplitude limiting value (for example, Iqlmt and Idlmt in the dq coordinate system), and a voltage value Ug of the grid-connected point, and obtain an active voltage adjustment amount Uqref and/or a reactive voltage adjustment amount Udref based on the active power adjustment amount Pref and/or the reactive power adjustment amount Qref. The voltage control unit 3021 herein may obtain an active current control amount Iq0 and/or a reactive current control amount Id0 based on the active voltage adjustment amount Uqref and/or the reactive voltage adjustment amount Udref. The current control unit 3022 herein may control the inverter circuit to output a target voltage value Ue (or a combined value of a target active voltage Uq and a target reactive voltage Ud in another coordinate system, for example, in the dq coordinate system) based on the active current control amount Iq0 and/or the reactive current control amount Id0. It may be understood that, the voltage control unit 3021 herein may be a voltage control loop (for example, a voltage loop). The voltage control unit 3021 herein may adjust the output current control amount (including the active current control amount Iq0 and/or the reactive current control amount Id0) based on the voltage adjustment amount (including the active voltage adjustment amount Uqref and/or the reactive voltage adjustment amount Udref). Herein, the voltage adjustment amount or the current control amount in the control module 302 may be a vector value obtained by combining a component on each coordinate axis of the coordinate system (for example, an abc coordinate system, an xyz coordinate system, or the dq coordinate system), or may be a component value on each coordinate axis obtained by transforming and decomposing the coordinate system (for example, the abc coordinate system or the xyz coordinate system is transformed into the dq coordinate system). For example, the control amount Iq0 of the active current output by the inverter circuit may be a q-axis component value in the dq coordinate system, and the control amount Id0 of the reactive current may be a d-axis component value in the dq coordinate system. The current control unit 3022 herein may be a current control loop (for example, a current loop). The current control unit 3022 herein may control the output voltage of the inverter circuit to be the target voltage value based on the active current control amount Iq0 and/or the reactive current control amount Id0.

According to this application, the photovoltaic inverter may obtain the active current control amount Iq0 and/or the reactive current control amount Id0 based on the active power adjustment amount Pref and/or the reactive power adjustment amount Qref based on an application scenario, and control the output voltage of the inverter circuit to be the target voltage value based on the active current control amount Iq0 and/or the reactive current control amount Id0, to separately perform current limiting on the active current and the reactive current at the grid-connected point. This maintains system stability, and improves system security. Response is quick, the control method is simple, and applicability is high.

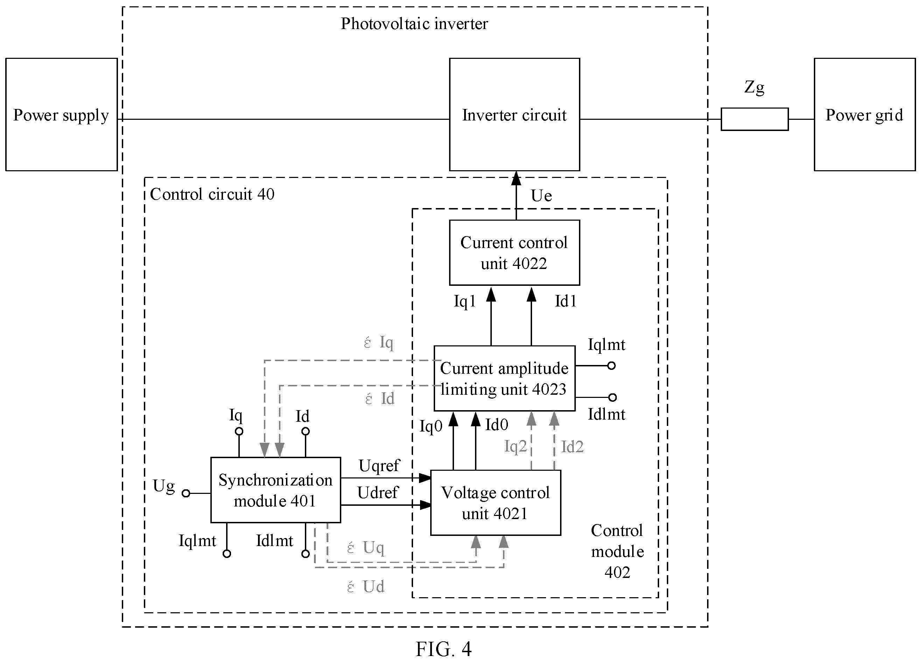

In some feasible implementations, the control module may further include a current amplitude limiting unit. FIG. 4 is another schematic diagram of a structure of a photovoltaic inverter according to an embodiment of this application. As shown in FIG. 4, a control module 402 in a control circuit 40 herein further includes a current amplitude limiting unit 4023, and the current amplitude limiting unit 4023 is connected to a voltage control unit 4021 and a current control unit 4022. In this application, the current amplitude limiting unit 4023 is also only a unit that can implement a corresponding function in the control circuit. In a specific implementation process, the unit that implements the corresponding function may be integrated into another functional module or control circuit. Details are not described below again. The current amplitude limiting unit 4023 herein may obtain an amplitude-limited active current control amount Iq1 and/or an amplitude-limited reactive current control amount Id1 based on an active current control amount Iq0 and/or a reactive current control amount Id0 and a current amplitude limiting value. The current control unit 4022 may control an output voltage of an inverter circuit to be a target voltage value based on the amplitude-limited active current control amount Iq1 and/or the amplitude-limited reactive current control amount Id1. It may be understood that, in some application scenarios in which fast current limiting needs to be performed, the photovoltaic inverter may further include a current amplitude limiting unit 4023. The current amplitude limiting unit 4023 herein may obtain the amplitude-limited active current control amount Iq1 and/or the amplitude-limited reactive current control amount Id1 based on the active current control amount Iq0 and/or the reactive current control amount Id0 and the current amplitude limiting value (for example, Iqlmt and Idlmt in a dq coordinate system). For example, when the current control amount (including the active current control amount Iq0 and/or the reactive current control amount Id0) is greater than the current amplitude limiting value (including an active component corresponding to the current amplitude limiting value and/or a reactive component corresponding to the current amplitude limiting value), the current amplitude limiting unit 4023 may perform amplitude limiting on the current control amount, to obtain the amplitude-limited current control amount (including the amplitude-limited active current control amount Iq1 and/or the amplitude-limited reactive current control amount Id1). The amplitude-limited active current control amount Iq1 (and/or the amplitude-limited reactive current control amount Id1) herein is less than or equal to the active component Iqlmt (and/or the reactive component Idlmt) corresponding to the current amplitude limiting value. Further, the current control unit 4022 may control the output voltage of the inverter circuit to be the target voltage value based on the amplitude-limited current control amount (including the active current control amount Iq1 and/or the reactive current control amount Id1). Herein, the current amplitude limiting value or the current control amount in the control module 402 may be a vector value obtained by combining a component on each coordinate axis of the coordinate system (for example, an abc coordinate system, an xyz coordinate system, or the dq coordinate system), or may be a component value on each coordinate axis obtained by transforming and decomposing the coordinate system (for example, the abc coordinate system or the xyz coordinate system is transformed into the dq coordinate system). For example, the control amount Iq1 of the amplitude-limited active current output by the inverter circuit may be a q-axis component value in the dq coordinate system, and the control amount Id1 of the reactive current may be a d-axis component value in the dq coordinate system.

According to this application, the current amplitude limiting unit 4023 may perform amplitude limiting on the current control amount, so that the amplitude-limited active current control amount Iq1 (and/or the amplitude-limited reactive current control amount Id1) is less than or equal to the active component (and/or the reactive component) corresponding to the current amplitude limiting value. This shortens current limiting response time and improves control efficiency.

As shown in FIG. 4, the current amplitude limiting unit 4023 may be further connected to a synchronization module 401. The current amplitude limiting unit 4023 herein may further output an active current feedback amount ΔIq and/or a reactive current feedback amount ΔId to the synchronization module 401 based on the active current control amount Iq0 and/or the reactive current control amount Id0 and the amplitude-limited active current control amount Iq1 and/or the amplitude-limited reactive current control amount Id1. The synchronization module 401 herein may further obtain an active voltage feedback adjustment amount ΔUq and/or a reactive voltage feedback adjustment amount ΔUd based on the active current feedback amount ΔIq and/or the reactive current feedback amount ΔId. The voltage control unit 4021 herein may further obtain an active current control amount Iq2 and/or a reactive current control amount Id2 based on an active voltage adjustment amount Uqref and/or a reactive voltage adjustment amount Udref and the active voltage feedback adjustment amount ΔUq and/or the reactive voltage feedback adjustment amount ΔUd. It may be understood that, after performing amplitude limiting on the current control amount, the current amplitude limiting unit 4023 may further obtain the output current feedback amount (including the active current feedback amount ΔIq and/or the reactive current feedback amount ΔId) through calculation (for example, obtain a difference by subtracting the amplitude-limited current control amount from the amplitude-unlimited current control amount) based on the amplitude-unlimited current control amount (including the active current control amount Iq0 and/or the reactive current control amount Id0) and the amplitude-limited current control amount (including the active current control amount Iq1 and/or the reactive current control amount Id1), and output the current feedback amount to the synchronization module 401. The synchronization module 401 may output the voltage feedback adjustment amount (including the active voltage feedback adjustment amount ΔUq and/or the reactive voltage feedback adjustment amount ΔUd) to the voltage control unit 4021 based on the current feedback amount. Further, the voltage control unit 4021 may adjust the output current control amount (including the active current control amount Iq2 and/or the reactive current control amount Id2) based on the voltage adjustment amount (including the active voltage adjustment amount Uqref and/or the reactive voltage adjustment amount Udref) and the voltage feedback adjustment amount (including the active voltage feedback adjustment amount ΔUq and/or the reactive voltage feedback adjustment amount ΔUd). Herein, the voltage feedback adjustment amount (or the current feedback amount), the voltage adjustment amount, or the current control amount in the control module 402 may be a vector value obtained by combining a component on each coordinate axis of the coordinate system (for example, the abc coordinate system, the xyz coordinate system, or the dq coordinate system), or may be a component value on each coordinate axis obtained by transforming and decomposing the coordinate system (for example, the abc coordinate system or the xyz coordinate system is transformed into the dq coordinate system). For example, the control amount Iq0 of the active current output by the inverter circuit may be a q-axis component value in the dq coordinate system, and the control amount Id0 of the reactive current may be a d-axis component value in the dq coordinate system.

According to this application, the current amplitude limiting unit 4023 may feed back, to the synchronization module 401, the difference between the amplitude-limited current control amount and the amplitude-unlimited current control amount as the current feedback amount. The synchronization module 401 may output a voltage feedback adjustment amount to the voltage control unit 4021 based on the current feedback amount. The voltage control unit 4021 may adjust the output current control amount based on the voltage adjustment amount and the voltage feedback adjustment amount. This shortens current limiting response time, improves system stability, and improves system control efficiency and power supply efficiency.

In some feasible implementations, the synchronization module 401 herein may further obtain an active power feedback adjustment amount and/or a reactive power feedback adjustment amount based on the active current feedback amount ΔIq and/or the reactive current feedback amount ΔId. The synchronization module 401 herein may further output a power angle feedback adjustment amount Δσ of the voltage based on the active power feedback adjustment amount, obtain the active voltage feedback adjustment amount ΔUq based on the power angle feedback adjustment amount Δσ of the output voltage, and/or obtain the reactive voltage feedback adjustment amount ΔUd based on the reactive power feedback adjustment amount. It may be understood that, similar to a principle of obtaining the power adjustment amount based on the current amplitude limiting value, the current value of the grid-connected point, and the voltage value of the grid-connected point, the synchronization module 401 herein may obtain the power feedback adjustment amount (including the active power feedback adjustment amount ΔP and/or the reactive power feedback adjustment amount ΔQ) through calculation based on the current feedback amount (including the active current feedback amount ΔIq and/or the reactive current feedback amount ΔId) and the output voltage value Ug of the grid-connected point (or a load impedance value obtained through calculation or another system parameter). The synchronization module 401 may obtain a power angle feedback adjustment amount Δσ of the output voltage Ue based on the active power feedback adjustment amount ΔQ (for example, a variation of an angle σ between the output voltage Ue of the inverter circuit and the voltage Ug of the grid-connected point in the dq coordinate system), and obtain the active voltage feedback adjustment amount ΔUq (for example, a variation of a q-axis component of the output voltage Ue of the inverter circuit in the dq coordinate system) based on the power angle feedback adjustment amount Δσ of the output voltage. The synchronization module 401 may further obtain the reactive voltage feedback adjustment amount ΔUd (for example, a variation of a d-axis component of the output voltage Ue of the inverter circuit in the dq coordinate system) based on the reactive power feedback adjustment amount.

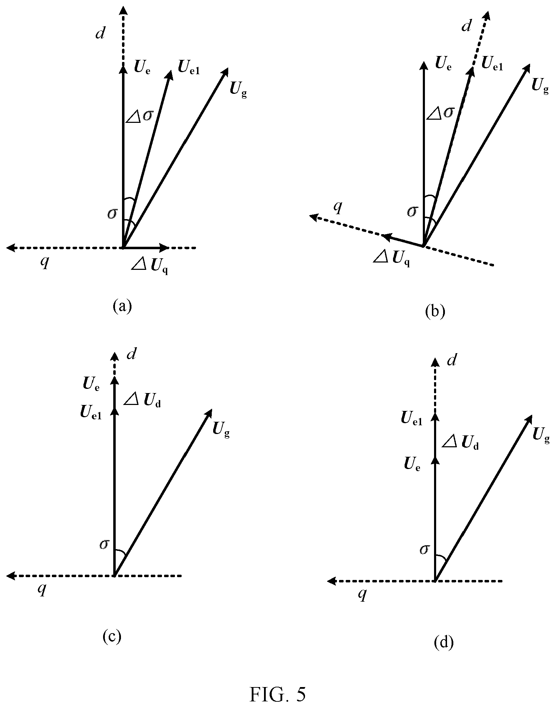

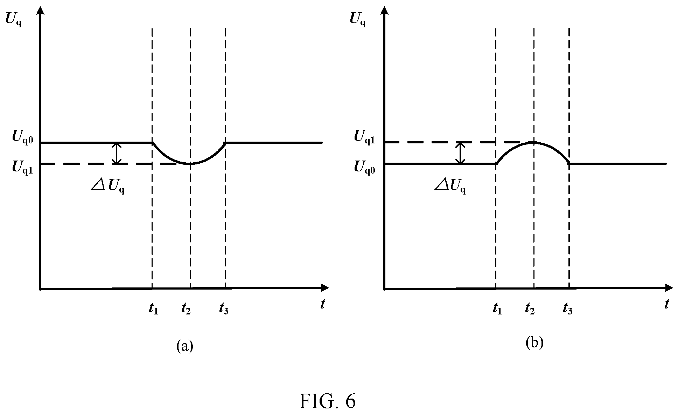

Refer to FIG. 5 and FIG. 6. FIG. 5 is a voltage control vector diagram according to an embodiment of this application, and FIG. 6 is a voltage control waveform diagram according to an embodiment of this application. As shown in (a) of FIG. 5, a synchronization module may establish a qd coordinate system by using a direction of an unadjusted output voltage of an inverter circuit as a d-axis, obtain an active voltage feedback adjustment amount ΔUq based on an active power feedback adjustment amount ΔP, and adjust the output voltage of the inverter circuit from Ue to an output voltage Ue1 of the inverter circuit. As shown in (a) in FIG. 6, in an adjustment process, the qd coordinate system is established by using the direction of the output voltage of the inverter circuit as the d-axis, where Uq indicates a q-axis component value (an active voltage value) of the output voltage of the inverter. Before a moment t1, the unadjusted output voltage of the inverter circuit is Ue. A q-axis component value of Ue is Uq0. From the moment t1 to a moment t2, the inverter adjusts the output voltage of the inverter circuit from Ue to Ue1 based on an active voltage feedback adjustment amount ΔUq. A q-axis component value of Ue1 is Uq1, and a difference between Uq1 and Uq0 is ΔUq. From the moment t2 to a moment t3, because the output voltage of the inverter circuit is adjusted from Ue to Ue1, the d-axis in the qd coordinate system overlaps the adjusted output voltage, and the q-axis component value of the output voltage of the inverter circuit changes to Uq0 again.

In some feasible implementations, the synchronization module may obtain a power angle feedback adjustment amount Δσ of the output voltage based on the active power feedback adjustment amount ΔP. Using the dq coordinate system shown in FIG. 5 as an example, the power angle feedback adjustment amount σ of the output voltage of the inverter circuit is a variation of an angle σ between the output voltage of the inverter circuit and a voltage Ug of a grid-connected point. As shown in (b) of FIG. 5, the synchronization module may establish a qd coordinate system by using a direction of an adjusted output voltage of the inverter circuit as a d-axis, obtain an active voltage feedback adjustment amount ΔUq based on the power angle feedback adjustment amount Δ_{β}, and adjust the output voltage of the inverter circuit from Ue to the output voltage Ue1 of the inverter circuit. As shown in (b) in FIG. 6, in an adjustment process, the qd coordinate system is established by using the direction of the adjusted output voltage of the inverter as the d-axis, where Uq indicates a q-axis component value (an active voltage value) of the output voltage of the inverter. Before a moment t1, an unadjusted output voltage of the inverter circuit is Ue. A q-axis component value of Ue is Uq0. From the moment t1 to a moment t2, the inverter adjusts the direction of the d-axis in the qd coordinate system to the direction of the adjusted output voltage of the inverter based on the power angle feedback adjustment amount Δσ. The q-axis component value of Ue changes to Uq1, and a difference between Uq1 and Uq0 is ΔUq. From the moment t2 to a moment t3, because the output voltage of the inverter circuit is adjusted from Ue to Ue1, and the output voltage of the inverter circuit overlaps the d-axis in the qd coordinate system, the q-axis component value of the output voltage of the inverter circuit changes to Uq0 again.

Refer to FIG. 5 again. The synchronization module 401 may further obtain a reactive voltage feedback adjustment amount ΔUd based on a reactive power feedback adjustment amount ΔQ. Using the dq coordinate system shown in FIG. 5 as an example, the reactive voltage feedback adjustment amount ΔUd is a variation of a d-axis component of the output voltage Ue of the inverter circuit. As shown in (c) of FIG. 5, it is assumed that a direction of a reactive current currently output by the inverter circuit is positive. If the reactive current output by the inverter circuit needs to be reduced, the output voltage Ue of the inverter circuit before feedback adjustment needs to be reduced to the output voltage Ue1 of the inverter circuit after feedback adjustment, and the reactive voltage feedback amount ΔUd needs to be obtained based on a variation of a d-axis component of the output voltage Ue of the inverter circuit before feedback adjustment and a variation of a d-axis component of the output voltage Ue1 of the inverter circuit after feedback adjustment. As shown in (d) in FIG. 5, it is assumed that a direction of a reactive current currently output by the inverter circuit is negative. If the reactive current output by the inverter circuit needs to be reduced, the output voltage Ue of the inverter circuit before feedback adjustment needs to be increased to the output voltage Ue1 of the inverter circuit after feedback adjustment, and the reactive voltage feedback amount ΔUd needs to be obtained based on a variation of a d-axis component of the output voltage Ue of the inverter circuit before feedback adjustment and a variation of a d-axis component of the output voltage Ue1 of the inverter circuit after feedback adjustment.

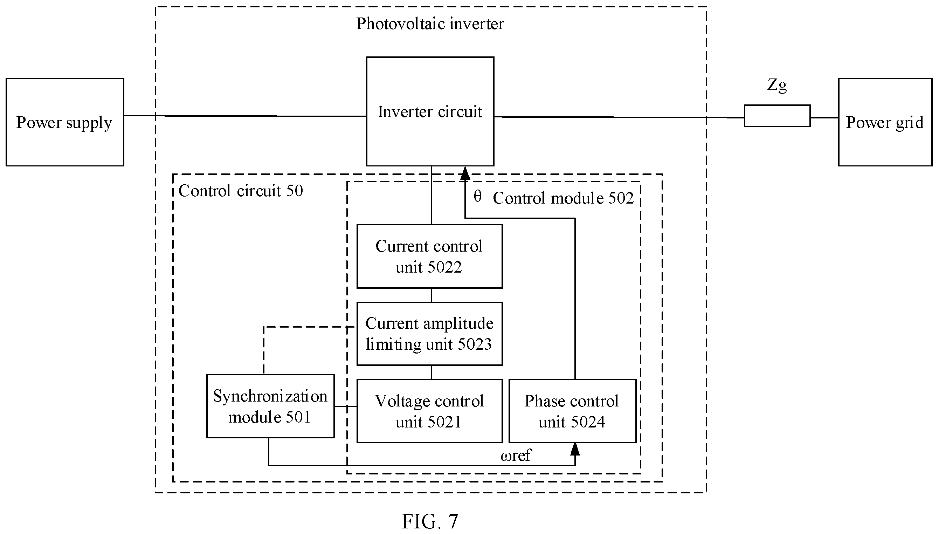

In some feasible implementations, a control module further includes a phase control unit. FIG. 7 is another schematic diagram of a structure of an inverter according to an embodiment of this application. As shown in FIG. 7, a control circuit 50 includes a synchronization module 501 and a control module 502. The control module 502 includes a voltage control unit 5021, a current control unit 5022, and a current amplitude limiting unit 5023. The control module 502 herein further includes a phase control unit 5024. The phase control unit 5024 is connected to an inverter circuit by using the synchronization module 501. In this application, the phase control unit 5024 is also only a unit that can implement a corresponding function in the control circuit. In a specific implementation process, the unit that implements the corresponding function may be integrated into another functional module or control circuit. Details are not described below again. The synchronization module 501 herein may further obtain an angular frequency adjustment amount ωref based on a current value of a grid-connected point, a current amplitude limiting value, and a voltage value of the grid-connected point. The phase control unit 5024 herein may adjust a phase of an output voltage of the inverter circuit to a target phase θ based on the angular frequency adjustment amount ωref. Herein, because a voltage phase of the grid-connected point in the power supply system is always in a changing state, the synchronization module 501 may obtain the angular frequency adjustment amount based on the current value of the grid-connected point, the current amplitude limiting value, and the voltage value of the grid-connected point, and then adjust the phase of the output voltage of the inverter circuit to the target phase by using the phase control unit. This enhances system synchronization.

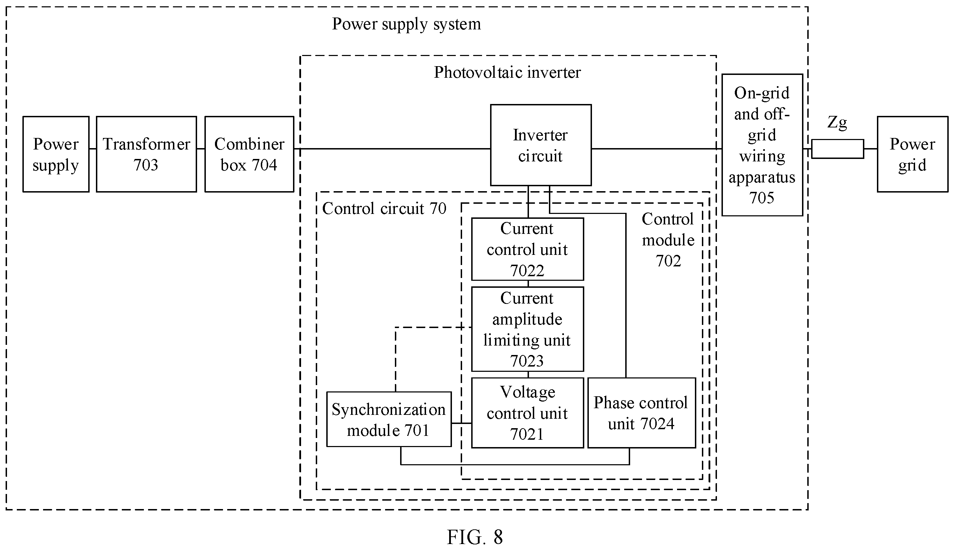

FIG. 8 is a schematic diagram of a structure of a power supply system according to an embodiment of this application. As shown in FIG. 8, the power supply system may include a transformer 703, and a power supply may be connected to a photovoltaic inverter by using the transformer 703. The transformer 703 herein may convert a voltage output of the power supply into a voltage value that matches the photovoltaic inverter, and output converted electric energy to the photovoltaic inverter. Direct current energy output by the photovoltaic inverter is converted into alternating current energy, and is then transmitted to a load, so that the system can supply power to a load of an alternating current electric device type on a power grid or a power grid side. This improves adaptability of the system. A connection manner and operating principles of the power supply, the photovoltaic inverter (including a control circuit 70 (including a synchronization module 701 and a control module 702 (including a voltage control unit 7021, a current control unit 7022, a current amplitude limiting unit 7023, and a phase control unit 7024)), and an inverter circuit) and a load in FIG. 8 are as the same as a connection manner and operating principles of the power supply, the photovoltaic inverter (including the control circuit 50 (including the synchronization module 501, the control module 502 (including the voltage control unit 5021, the current control unit 5022, the current amplitude limiting unit 5023, and the phase control unit 5024)), and the inverter circuit) and the load in FIG. 7. Details are not described herein again.

According to this application, an active power adjustment amount and/or a reactive power adjustment amount of the inverter circuit may be separately obtained based on an application scenario, and an output voltage of the inverter circuit may be controlled to be a target voltage value based on the active power adjustment amount and/or the reactive power adjustment amount, to separately perform current limiting on an active current and a reactive current at a grid-connected point. This maintains system stability, and improves system security. Response is quick, the control method is simple, and applicability is high.

In some feasible implementations, the power supply system may further include a direct current bus, and the transformer 703 may be connected to the power grid by using the direct current bus and the photovoltaic inverter. The direct current bus herein may include one bus capacitor or a plurality of bus capacitors connected in series to each other, and may be used for energy storage. The direct current bus may include a bus capacitor C. The photovoltaic inverter may convert electric energy that is output by the power supply and stored at two ends of the bus capacitor C, and output a corresponding current and voltage to maintain operation of the power grid.

Refer to FIG. 8 again. The power supply system shown in FIG. 8 may further include a combiner box 704, and the transformer in the power supply system may be connected to the photovoltaic inverter by using the combiner box 704. It may be understood that the transformer in the power supply system may be connected to the combiner box 704 and then directly connected to the photovoltaic inverter by using the combiner box 704, or may be connected to the direct current bus by using the combiner box 704 and connected to the photovoltaic inverter by using the direct current bus. This may be specifically set based on an actual application scenario, and is not limited herein.

Refer to FIG. 8 again. The load of the power supply system may further include an on-grid and off-grid wiring apparatus 705. The photovoltaic inverter may supply power to an electrical device or an electrical transmission device such as a transmission line, a power transfer station, a battery, a communication base station, or a home device in the power grid by using the on-grid and off-grid wiring apparatus 705.

In this application, the functional modules in the power supply system have various and flexible composition manners, and can adapt to different power supply environments. This improves diversity of application scenarios of the power supply system and enhances adaptability of the power supply system. In addition, in any one of the power supply systems shown in FIG. 1 to FIG. 8, or in another photovoltaic inverter configured to connect to the power grid, or in a controller of another photovoltaic inverter connected to the power grid, the power supply system (or the photovoltaic inverter, or the controller of the photovoltaic inverter) may separately perform current limiting on the active current and the reactive current at the grid-connected point based on an application scenario. This maintains system stability, and improves system security. Response is quick, the control method is simple, and applicability is high. In addition, the modules or units in any power supply system or the photovoltaic inverter shown in FIG. 1 to FIG. 8 are examples of the modules or units for ease of description. In a practical implementation, functions corresponding to the modules and units may also be implemented by using other functional modules, units, or circuits. It can be understood that the modules or units described in this application may also be integrated into other units, modules or circuits. For ease of description, the following uses the structure of the power supply system shown in FIG. 2 as an example to describe a grid-connected control method in embodiments of this application.

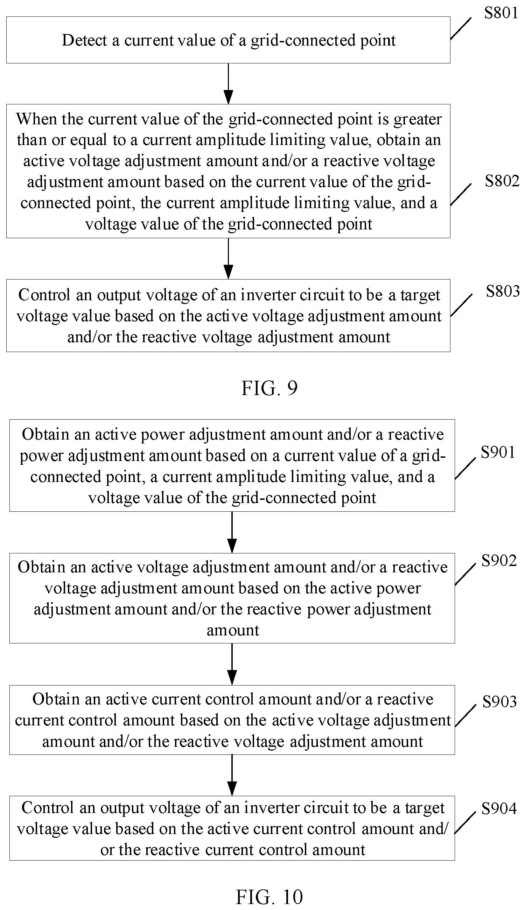

FIG. 9 is a schematic flowchart of a grid-connected control method according to this application. The grid-connected control method provided in this application is applicable to a photovoltaic inverter connected to a power grid, and is also applicable to any power supply system shown in FIG. 1 to FIG. 8. As shown in FIG. 9, the grid-connected control method provided in this application includes the following steps.

S801: Detect a current value of a grid-connected point.

S802: When the current value of the grid-connected point is greater than or equal to a current amplitude limiting value, obtain an active voltage adjustment amount and/or a reactive voltage adjustment amount based on the current value of the grid-connected point, the current amplitude limiting value, and a voltage value of the grid-connected point. S803: Control an output voltage of an inverter circuit to be a target voltage value based on the active voltage adjustment amount and/or the reactive voltage adjustment amount.

In this application, the photovoltaic inverter may obtain the output current value of the grid-connected point (for example, in a manner of obtaining, collecting, receiving, detecting, or storing). The output current value of the grid-connected point herein may be directly collected or detected, or may be obtained through calculation by using another current value that is easy to collect or obtain. For example, the output current value is obtained through calculation by using an output current value of the inverter circuit, or may be obtained through calculation by using an output current value at a connection point between the photovoltaic inverter and the power grid impedance, or may be obtained through calculation by using an output current value at another sampling point, which may be specifically set based on an application scenario. It may be understood that, in different application scenarios (for example, the photovoltaic inverter is equivalent to a voltage source in a grid forming scenario), after the inverter circuit outputs a relatively constant output voltage, an output power and an output current of the inverter circuit may change relative to a change in the load. For example, when the load increases, the output power and the output current of the inverter circuit increase correspondingly, to ensure normal power supply to the load. In some application scenarios, to avoid overvoltage or overheating of a component in a power supply system, short-term transient current limiting or long-term steady current limiting needs to be performed on the power supply system. When a current value of the grid-connected point is greater than or equal to a current amplitude limiting value, the photovoltaic inverter herein may obtain an active voltage adjustment amount and/or a reactive voltage adjustment amount based on the current value of the grid-connected point, the current amplitude limiting value, and a voltage value of the grid-connected point, and control an output voltage of the inverter circuit to be a target voltage value based on the active voltage adjustment amount and/or the reactive voltage adjustment amount, to reduce the current value of the grid-connected point by reducing active power and/or reactive power output by the photovoltaic inverter. The current amplitude limiting value herein may be a current amplitude limiting value obtained by the photovoltaic inverter (for example, in a manner of obtaining, receiving, calculating, or storing). The current amplitude limiting value herein may be a current value, or may be a plurality of current values, or may be one current interval formed by a plurality of current values, or may be a plurality of current intervals formed by a plurality of current values. The current amplitude limiting value herein may be a vector value obtained by combining a component on each coordinate axis of a coordinate system (for example, an abc coordinate system, an xyz coordinate system, or a dq coordinate system), or may be a component value on each coordinate axis obtained by transforming and decomposing a coordinate system (for example, an abc coordinate system or an xyz coordinate system is transformed into a dq coordinate system). For example, in an application scenario of grid-connected operation, when a power grid is faulty (for example, a dip occurs in the power grid), a current output by the inverter current needs a relatively large reactive component to maintain a power grid voltage. In this case, if current limiting is performed on a power supply system, current limiting needs to be preferentially performed on an active current (for example, a q-axis current component in the dq coordinate system) output by the inverter circuit. Similarly, for example, in an application scenario in which an electric energy yield needs to be preferentially met, if current limiting is performed on the power supply system, current limiting needs to be preferentially performed on a reactive current (for example, a d-axis current component in the dq coordinate system) output by the inverter circuit. Correspondingly, the photovoltaic inverter may obtain the output power (including the active power and/or the reactive power) of the inverter circuit based on the current value of the grid-connected point and the voltage value of the grid-connected point, obtain reduced output power of the inverter circuit (that is, output power of the inverter circuit that can perform current limiting, including the active power and/or the reactive power) based on the current amplitude limiting value and the voltage value of the grid-connected point, further obtain the voltage adjustment amount (including the active voltage adjustment amount and/or the reactive voltage adjustment amount), and control an output voltage of the inverter circuit to be a target voltage value based on the active voltage adjustment amount and/or the reactive voltage adjustment amount, to reduce the current value of the grid-connected point by reducing active power and/or reactive power output by the photovoltaic inverter. Herein, the power and the voltage (or the current) that are output by the inverter circuit, or the corresponding adjustment amounts may be a vector value obtained by combining a component on each coordinate axis of the coordinate system (for example, the abc coordinate system, the xyz coordinate system, or the dq coordinate system), or may be a component value on each coordinate axis obtained by transforming and decomposing the coordinate system (for example, the abc coordinate system or the xyz coordinate system is transformed into the dq coordinate system). For example, the active voltage output by the inverter circuit may be a q-axis component value in the dq coordinate system, and the reactive voltage may be a d-axis component value in the dq coordinate system.

According to this application, the photovoltaic inverter may separately obtain an active power adjustment amount and/or a reactive power adjustment amount of the inverter circuit based on an application scenario, and control the output voltage of the inverter circuit to be the target voltage value based on the active power adjustment amount and/or the reactive power adjustment amount, to separately perform current limiting on the active current and the reactive current at the grid-connected point. This maintains system stability, and improves system security. Response is quick, the control method is simple, and applicability is high.

FIG. 10 is another schematic flowchart of a grid-connected control method according to this application. As shown in FIG. 10, after detecting a current value of the grid-connected point in step S801, the method may include the following steps.

S901: Obtain the active power adjustment amount and/or the reactive power adjustment amount based on the current value of the grid-connected point, the current amplitude limiting value, and the voltage value of the grid-connected point.

S902: Obtain the active voltage adjustment amount and/or the reactive voltage adjustment amount based on the active power adjustment amount and/or the reactive power adjustment amount.

In some feasible implementations, the photovoltaic inverter may obtain the output power (including the active power and/or the reactive power) of the inverter circuit based on the current value of the grid-connected point and the voltage value of the grid-connected point, obtain the reduced output power of the inverter circuit (that is, the output power of the inverter circuit that can perform current limiting, including the active power and/or the reactive power) based on the current amplitude limiting value and the voltage value of the grid-connected point, obtain the power adjustment amount (including the active power adjustment amount and/or the reactive power adjustment amount) of the inverter circuit through calculation (for example, by using a difference between the output power of the inverter circuit and the reduced output power of the inverter circuit), and obtain the voltage adjustment amount (including the active voltage adjustment amount and/or the reactive voltage adjustment amount) based on the power adjustment amount. Herein, the power and the voltage (or the current) that are output by the inverter circuit, or the corresponding adjustment amounts may be a vector value obtained by combining a component on each coordinate axis of the coordinate system (for example, the abc coordinate system, the xyz coordinate system, or the dq coordinate system), or may be a component value on each coordinate axis obtained by transforming and decomposing the coordinate system (for example, the abc coordinate system or the xyz coordinate system is transformed into the dq coordinate system). For example, the adjustment amount of the active voltage output by the inverter circuit may be a q-axis component value in the dq coordinate system, and the adjustment amount of the reactive voltage may be a d-axis component value in the dq coordinate system.

The photovoltaic inverter herein may separately obtain the active power adjustment amount and/or the reactive power adjustment amount of the inverter circuit based on an application scenario, and obtain the active voltage adjustment amount and/or the reactive voltage adjustment amount of the inverter circuit based on the active power adjustment amount and/or the reactive power adjustment amount. Response is quick, the control method is simple, and applicability is high.

S903: Obtain an active current control amount and/or a reactive current control amount based on the active voltage adjustment amount and/or the reactive voltage adjustment amount.

S904: Control the output voltage of the inverter circuit to be the target voltage value based on the active current control amount and/or the reactive current control amount.

In some feasible implementations, the voltage adjustment amount or the current control amount in the photovoltaic inverter may be a vector value obtained by combining a component on each coordinate axis of the coordinate system (for example, the abc coordinate system, the xyz coordinate system, or the dq coordinate system), or may be a component value on each coordinate axis obtained by transforming and decomposing the coordinate system (for example, the abc coordinate system or the xyz coordinate system is transformed into the dq coordinate system). For example, the control amount of the active current output by the inverter circuit may be a q-axis component value in the dq coordinate system, and the control amount of the reactive current may be a d-axis component value in the dq coordinate system. The photovoltaic inverter herein may control the output voltage of the inverter circuit to be the target voltage value based on the active current control amount and/or the reactive current control amount. According to this application, the photovoltaic inverter may respectively obtain the active current control amount and/or the reactive current control amount through adjustment based on the active power adjustment amount and/or the reactive power adjustment amount based on an application scenario, and control the output voltage of the inverter circuit to be the target voltage value based on the active current control amount and/or the reactive current control amount, to separately perform current limiting on the active current and the reactive current at the grid-connected point. This maintains system stability, and improves system security. Response is quick, the control method is simple, and applicability is high.

In some feasible implementations, the photovoltaic inverter further includes a current amplitude limiting unit. After the obtaining an active current control amount and/or a reactive current control amount based on the active voltage adjustment amount and/or the reactive voltage adjustment amount in S903, the method further includes: obtaining an amplitude-limited active current control amount and/or an amplitude-limited reactive current control amount based on the active current control amount and/or the reactive current control amount and the current amplitude limiting value; and controlling the output voltage of the inverter circuit to be the target voltage value based on the amplitude-limited active current control amount and/or the amplitude-limited reactive current control amount. It may be understood that, the photovoltaic inverter herein may obtain the amplitude-limited active current control amount and/or the amplitude-limited reactive current control amount based on the active current control amount and/or the reactive current control amount and the current amplitude limiting value. For example, when the current control amount (including the active current control amount and/or the reactive current control amount) is greater than the current amplitude limiting value (including an active component corresponding to the current amplitude limiting value and/or a reactive component corresponding to the current amplitude limiting value), the current amplitude limiting unit may perform amplitude limiting on the current control amount, to obtain the amplitude-limited current control amount (including the amplitude-limited active current control amount and/or the amplitude-limited reactive current control amount). The amplitude-limited active current control amount (and/or the amplitude-limited reactive current control amount) herein is less than or equal to the active component (and/or the reactive component) corresponding to the current amplitude limiting value. Further, the photovoltaic inverter may control the output voltage of the inverter circuit to be the target voltage value based on the amplitude-limited current control amount (including the active current control amount and/or the reactive current control amount). Herein, the current amplitude limiting value or the current control amount in the photovoltaic inverter may be a vector value obtained by combining a component on each coordinate axis of the coordinate system (for example, the abc coordinate system, the xyz coordinate system, or the dq coordinate system), or may be a component value on each coordinate axis obtained by transforming and decomposing the coordinate system (for example, the abc coordinate system or the xyz coordinate system is transformed into the dq coordinate system). For example, the control amount of the active current output by the inverter circuit may be a q-axis component value in the dq coordinate system, and the control amount of the reactive current may be a d-axis component value in the dq coordinate system.

According to this application, the photovoltaic inverter may perform amplitude limiting on the current control amount, so that the amplitude-limited active current control amount (and/or the amplitude-limited reactive current control amount) is less than or equal to the active component (and/or the reactive component) corresponding to the current amplitude limiting value. This shortens current limiting response time and improves control efficiency.

In some feasible implementations, after the obtaining an amplitude-limited active current control amount and/or an amplitude-limited reactive current control amount based on the active current control amount and/or the reactive current control amount and the current amplitude limiting value, the method further includes: obtaining an active current feedback amount and/or a reactive current feedback amount based on the active current control amount and/or the reactive current control amount and the amplitude-limited active current control amount and/or the amplitude-limited reactive current control amount; obtaining an active voltage feedback adjustment amount and/or a reactive voltage feedback adjustment amount based on the active current feedback amount and/or the reactive current feedback amount; and obtaining the active current control amount and/or the reactive current control amount based on the active voltage adjustment amount and/or the reactive voltage adjustment amount and the active voltage feedback adjustment amount and/or the reactive voltage feedback adjustment amount. It may be understood that, after performing amplitude limiting on the current control amount, the photovoltaic inverter may further obtain the output current feedback amount (including the active current feedback amount and/or the reactive current feedback amount) through calculation (for example, obtain a difference by subtracting the amplitude-limited current control amount from the amplitude-unlimited current control amount) based on the amplitude-unlimited current control amount (including the active current control amount and/or the reactive current control amount) and the amplitude-limited current control amount (including the active current control amount and/or the reactive current control amount). The photovoltaic inverter may output the voltage feedback adjustment amount (including the active voltage feedback adjustment amount and/or the reactive voltage feedback adjustment amount) to the voltage control unit based on the current feedback amount. Further, the voltage control unit may adjust the output current control amount (including the active current control amount and/or the reactive current control amount) based on the voltage adjustment amount (including the active voltage adjustment amount and/or the reactive voltage adjustment amount) and the voltage feedback adjustment amount (including the active voltage feedback adjustment amount and/or the reactive voltage feedback adjustment amount). Herein, the voltage feedback adjustment amount (or the current feedback amount), the voltage adjustment amount, or the current control amount in the control module may be a vector value obtained by combining a component on each coordinate axis of the coordinate system (for example, the abc coordinate system, the xyz coordinate system, or the dq coordinate system), or may be a component value on each coordinate axis obtained by transforming and decomposing the coordinate system (for example, the abc coordinate system or the xyz coordinate system is transformed into the dq coordinate system). For example, the control amount of the active current output by the inverter circuit may be a q-axis component value in the dq coordinate system, and the control amount of the reactive current may be a d-axis component value in the dq coordinate system.

According to this application, the photovoltaic inverter may feed back the difference between the amplitude-limited current control amount and the amplitude-unlimited current control amount as the current feedback amount. The photovoltaic inverter may output a voltage feedback adjustment amount to the voltage control unit based on the current feedback amount. The photovoltaic inverter may adjust the output current control amount based on the voltage adjustment amount and the voltage feedback adjustment amount. This shortens current limiting response time, improves system stability, and improves system control efficiency and power supply efficiency.

In some feasible implementations, the obtaining an active voltage feedback adjustment amount and/or a reactive voltage feedback adjustment amount based on the active current feedback amount and/or the reactive current feedback amount includes: obtaining an active power feedback adjustment amount and/or a reactive power feedback adjustment amount based on the active current feedback amount and/or the reactive current feedback amount; outputting a power angle feedback adjustment amount of the voltage based on the active power feedback adjustment amount, and obtaining the active voltage feedback adjustment amount based on the power angle feedback adjustment amount of the output voltage; and/or obtaining the reactive voltage feedback adjustment amount based on the reactive power feedback adjustment amount. It may be understood that, similar to a principle of obtaining the power adjustment amount based on the current amplitude limiting value, the current value of the grid-connected point, and the voltage value of the grid-connected point, the photovoltaic inverter herein may obtain the power feedback adjustment amount (including the active power feedback adjustment amount and/or the reactive power feedback adjustment amount) through calculation based on the current feedback amount (including the active current feedback amount and/or the reactive power current feedback amount) and the output voltage value of the grid-connected point (or a load impedance value obtained through calculation or another system parameter). The photovoltaic inverter herein may obtain the power angle feedback adjustment amount of the output voltage (for example, a variation of an angle between the output voltage of the inverter circuit and the voltage of the grid-connected point in the dq coordinate system) based on the active power feedback adjustment amount, and obtain an active voltage feedback adjustment amount (for example, a variation of a q-axis component of the output voltage of the inverter circuit in the dq coordinate system) based on the power angle feedback adjustment amount of the output voltage. The photovoltaic inverter may further obtain the reactive voltage feedback adjustment amount (for example, a variation of a d-axis component of the output voltage of the inverter circuit in the dq coordinate system) based on the reactive power feedback adjustment amount.

The photovoltaic inverter herein may quickly output the voltage feedback adjustment amount to the voltage control module based on the current feedback amount. The control method is simple, response duration is shortened, and system control efficiency and power supply efficiency are improved.

In some feasible implementations, after the detecting a current value of the grid-connected point, the method further includes: obtaining an angular frequency adjustment amount based on the current value of the grid-connected point, the current amplitude limiting value, and the voltage value of the grid-connected point; and adjusting a phase of the output voltage of the inverter circuit to a target phase based on the angular frequency adjustment amount. The phase control unit herein may adjust a phase of the target voltage output by the inverter circuit to a target phase based on the angular frequency adjustment amount. Herein, because a voltage phase of the grid-connected point in the power supply system is always in a changing state, the photovoltaic inverter may obtain the angular frequency adjustment amount based on the current value of the grid-connected point, the current amplitude limiting value, and the voltage value of the grid-connected point, and then adjust the phase of the output voltage of the inverter circuit to the target phase by using the phase control unit. This enhances system synchronization.

According to this application, an active power adjustment amount and/or a reactive power adjustment amount of the inverter circuit may be separately obtained based on an application scenario, and an output voltage of the inverter circuit may be controlled to be a target voltage value based on the active power adjustment amount and/or the reactive power adjustment amount, to separately perform current limiting on an active current and a reactive current at a grid-connected point. This maintains system stability, and improves system security. Response is quick, the control method is simple, and applicability is high.

The foregoing descriptions are only specific implementations of the present invention, but are not intended to limit the protection scope of the present invention.

## Claims

1. A grid-connected photovoltaic inverter (1), wherein the photovoltaic inverter (1) comprises a control circuit (10) and an inverter circuit (11), one end of the inverter circuit (11) is connected to a direct current power supply (2), the other end of the inverter circuit (11) is connected to a power grid (3) at a grid-connected point by using power grid impedance (Zg), and the control circuit (10) is connected to the inverter circuit (11); and
the control circuit (10) is configured to: when a current value of the grid-connected point is greater than or equal to a current amplitude limiting value, obtain an active voltage adjustment amount and/or a reactive voltage adjustment amount based on the current value of the grid-connected point, the current amplitude limiting value, and a voltage value of the grid-connected point, and control an output voltage of the inverter circuit (11) to be a target voltage value based on the active voltage adjustment amount and/or the reactive voltage adjustment amount, to reduce the current value of the grid-connected point by reducing active power and/or reactive power output by the photovoltaic inverter (1),
**characterised in that**
the control circuit (10) is further configured to obtain an angular frequency adjustment amount based on the current value of the grid-connected point, the current amplitude limiting value, and the voltage value of the grid-connected point; and
the control circuit (10) is further configured to adjust a phase of the output voltage of the inverter circuit (11) to a target phase based on the angular frequency adjustment amount.

2. The photovoltaic inverter (1) according to claim 1, wherein the control circuit (10) is further configured to: obtain an active power adjustment amount and/or a reactive power adjustment amount based on the current value of the grid-connected point, the current amplitude limiting value, and the voltage value of the grid-connected point, obtain the active voltage adjustment amount and/or the reactive voltage adjustment amount based on the active power adjustment amount and/or the reactive power adjustment amount, and control the output voltage of the inverter circuit (11) to be the target voltage value based on the active voltage adjustment amount and/or the reactive voltage adjustment amount.

3. The photovoltaic inverter (1) according to claim 2, wherein the control circuit (10) is further configured to: obtain an active current control amount and/or a reactive current control amount based on the active voltage adjustment amount and/or the reactive voltage adjustment amount, and control the output voltage of the inverter circuit (11) to be the target voltage value based on the active current control amount and/or the reactive current control amount.

4. The photovoltaic inverter (1) according to claim 3, wherein the control circuit (10) is further configured to: obtain an amplitude-limited active current control amount and/or an amplitude-limited reactive current control amount based on the active current control amount and/or the reactive current control amount and the current amplitude limiting value, and control the output voltage of the inverter circuit (11) to be the target voltage value based on the amplitude-limited active current control amount and/or the amplitude-limited reactive current control amount.

5. The photovoltaic inverter (1) according to claim 4, wherein the control circuit (10) is further configured to obtain an active current feedback amount and/or a reactive current feedback amount based on the active current control amount and/or the reactive current control amount and the amplitude-limited active current control amount and/or the amplitude-limited reactive current control amount;
the control circuit (10) is further configured to obtain an active voltage feedback adjustment amount and/or a reactive voltage feedback adjustment amount based on the active current feedback amount and/or the reactive current feedback amount; and
the control circuit (10) is further configured to obtain the active current control amount and/or the reactive current control amount based on the active voltage adjustment amount and/or the reactive voltage adjustment amount and the active voltage feedback adjustment amount and/or the reactive voltage feedback adjustment amount.

6. The photovoltaic inverter (1) according to claim 5, wherein the control circuit (10) is further configured to obtain an active power feedback adjustment amount and/or a reactive power feedback adjustment amount based on the active current feedback amount and/or the reactive current feedback amount; and
the control circuit (10) is further configured to: obtain a power angle feedback adjustment amount of the voltage based on the active power feedback adjustment amount, and obtain the active voltage feedback adjustment amount based on the power angle feedback adjustment amount of the output voltage; and/or
obtain the reactive voltage feedback adjustment amount based on the reactive power feedback adjustment amount.

7. A grid-connected control method for a photovoltaic inverter (1), wherein the control method is applicable to a grid-connected photovoltaic inverter (1), the photovoltaic inverter (1) comprises a control circuit (10) and an inverter circuit (11), one end of the inverter circuit (11) is connected to a direct current power supply (2), the other end of the inverter circuit (11) is connected to a power grid (3) at a grid-connected point by using power grid impedance (Zg), the control circuit (10) is connected to the inverter circuit (11), and the method comprises:
detecting (S801) a current value of the grid-connected point;
when the current value of the grid-connected point is greater than or equal to a current amplitude limiting value, obtaining (S802) an active voltage adjustment amount and/or a reactive voltage adjustment amount based on the current value of the grid-connected point, the current amplitude limiting value, and a voltage value of the grid-connected point; and
controlling (S803) an output voltage of the inverter circuit (11) to be a target voltage value based on the active voltage adjustment amount and/or the reactive voltage adjustment amount, to reduce the current value of the grid-connected point by reducing active power and/or reactive power output by the photovoltaic inverter (1), wherein
after the detecting a current value of the grid-connected point, the method further comprises:
obtaining an angular frequency adjustment amount based on the current value of the grid-connected point, the current amplitude limiting value, and the voltage value of the grid-connected point; and
adjusting a phase of the output voltage of the inverter circuit (11) to a target phase based on the angular frequency adjustment amount.

8. The control method according to claim 7, wherein the obtaining an active voltage adjustment amount and/or a reactive voltage adjustment amount based on the current value of the grid-connected point, the current amplitude limiting value, and a voltage value of the grid-connected point comprises:
obtaining (S901) an active power adjustment amount and/or a reactive power adjustment amount based on the current value of the grid-connected point, the current amplitude limiting value, and the voltage value of the grid-connected point; and
obtaining (S902) the active voltage adjustment amount and/or the reactive voltage adjustment amount based on the active power adjustment amount and/or the reactive power adjustment amount, and controlling the output voltage of the inverter circuit (11) to be the target voltage value based on the active voltage adjustment amount and/or the reactive voltage adjustment amount.

9. The control method according to claim 8, wherein the controlling an output voltage of the inverter circuit (11) to be a target voltage value based on the active voltage adjustment amount and/or the reactive voltage adjustment amount comprises:
obtaining (S903) an active current control amount and/or a reactive current control amount based on the active voltage adjustment amount and/or the reactive voltage adjustment amount; and
controlling (S904) the output voltage of the inverter circuit (11) to be the target voltage value based on the active current control amount and/or the reactive current control amount.

10. The control method according to claim 9, wherein after the obtaining an active current control amount and/or a reactive current control amount based on the active voltage adjustment amount and/or the reactive voltage adjustment amount, the method further comprises:
obtaining an amplitude-limited active current control amount and/or an amplitude-limited reactive current control amount based on the active current control amount and/or the reactive current control amount and the current amplitude limiting value; and
controlling the output voltage of the inverter circuit (11) to be the target voltage value based on the amplitude-limited active current control amount and/or the amplitude-limited reactive current control amount.

11. The control method according to claim 10, wherein after the obtaining an amplitude-limited active current control amount and/or an amplitude-limited reactive current control amount based on the active current control amount and/or the reactive current control amount and the current amplitude limiting value, the method further comprises:
obtaining an active current feedback amount and/or a reactive current feedback amount based on the active current control amount and/or the reactive current control amount and the amplitude-limited active current control amount and/or the amplitude-limited reactive current control amount;
obtaining an active voltage feedback adjustment amount and/or a reactive voltage feedback adjustment amount based on the active current feedback amount and/or the reactive current feedback amount; and
obtaining the active current control amount and/or the reactive current control amount based on the active voltage adjustment amount and/or the reactive voltage adjustment amount and the active voltage feedback adjustment amount and/or the reactive voltage feedback adjustment amount.

12. The control method according to claim 11, wherein the obtaining an active voltage feedback adjustment amount and/or a reactive voltage feedback adjustment amount based on the active current feedback amount and/or the reactive current feedback amount comprises:
obtaining an active power feedback adjustment amount and/or a reactive power feedback adjustment amount based on the active current feedback amount and/or the reactive current feedback amount; and
outputting a power angle feedback adjustment amount of the voltage based on the active power feedback adjustment amount, and obtaining the active voltage feedback adjustment amount based on the power angle feedback adjustment amount of the output voltage; and/or
obtaining the reactive voltage feedback adjustment amount based on the reactive power feedback adjustment amount.

## Patentansprüche

1. Netzgekoppelter Photovoltaikwechselrichter (1), wobei der Photovoltaikwechselrichter (1) eine Steuerschaltung (10) und eine Wechselrichterschaltung (11) umfasst, ein Ende der Wechselrichterschaltung (11) mit einer Gleichstromversorgung (2) gekoppelt ist, das andere Ende der Wechselrichterschaltung (11) mit einem Stromnetz (3) an einem netzgekoppelten Punkt unter Verwendung einer Stromnetzimpedanz (Zg) gekoppelt ist und die Steuerschaltung (10) mit der Wechselrichterschaltung (11) gekoppelt ist; und
die Steuerschaltung (10) zu Folgendem konfiguriert ist: wenn ein Stromwert des netzgekoppelten Punktes größer als oder gleich einem Stromamplitudengrenzwert ist, Erlangen eines Einstellbetrags für die Wirkspannung und/oder eines Einstellbetrags für die Blindspannung basierend auf dem Stromwert des netzgekoppelten Punktes, dem Stromamplitudengrenzwert und einem Spannungswert des netzgekoppelten Punktes und Steuern einer Ausgangsspannung der Wechselrichterschaltung (11) derart, dass sie ein Zielspannungswert basierend auf dem Einstellbetrag für die Wirkspannung und/oder dem Einstellbetrag für die Blindspannung ist, um den Stromwert des netzgekoppelten Punktes durch Verringern der Wirkleistung und/oder der Blindleistung, die durch den Photovoltaikwechselrichter (1) ausgegeben werden, zu verringern, **dadurch gekennzeichnet, dass**
die Steuerschaltung (10) ferner dazu konfiguriert ist, einen Einstellbetrag für die Winkelfrequenz basierend auf dem Stromwert des netzgekoppelten Punktes, dem Stromamplitudengrenzwert und dem Spannungswert des netzgekoppelten Punktes zu erlangen; und
die Steuerschaltung (10) ferner dazu konfiguriert ist, eine Phase der Ausgangsspannung der Wechselrichterschaltung (11) basierend auf dem Einstellbetrag für die Winkelfrequenz auf eine Zielphase einzustellen.

2. Photovoltaikwechselrichter (1) nach Anspruch 1, wobei die Steuerschaltung (10) ferner zu Folgendem konfiguriert ist: Erlangen eines Einstellbetrags für die Wirkleistung und/oder eines Einstellbetrags für die Blindleistung basierend auf dem Stromwert des netzgekoppelten Punktes, dem Stromamplitudengrenzwert und dem Spannungswert des netzgekoppelten Punktes, Erlangen des Einstellbetrags für die Wirkspannung und/oder des Einstellbetrags für die Blindspannung basierend auf dem Einstellbetrag für die Wirkleistung und/oder dem Einstellbetrag für die Blindleistung und Steuern der Ausgangsspannung der Wechselrichterschaltung (11) derart, dass sie der Zielspannungswert basierend auf dem Einstellbetrag für die Wirkspannung und/oder dem Einstellbetrag für die Blindspannung ist.

3. Photovoltaikwechselrichter (1) nach Anspruch 2, wobei die Steuerschaltung (10) ferner zu Folgendem konfiguriert ist: Erlangen eines Steuerbetrags für den Wirkstrom und/oder eines Steuerbetrags für den Blindstrom basierend auf dem Einstellbetrag für die Wirkspannung und/oder dem Einstellbetrag für die Blindspannung und Steuern der Ausgangsspannung der Wechselrichterschaltung (11) derart, dass sie der Zielspannungswert basierend auf dem Steuerbetrag für den Wirkstrom und/oder dem Steuerbetrag für den Blindstrom ist.

4. Photovoltaikwechselrichter (1) nach Anspruch 3, wobei die Steuerschaltung (10) ferner zu Folgendem konfiguriert ist: Erlangen eines amplitudenbegrenzten Steuerbetrags für den Wirkstrom und/oder eines amplitudenbegrenzten Steuerbetrags für den Blindstrom basierend auf dem Steuerbetrag für den Wirkstrom und/oder dem Steuerbetrag für den Blindstrom und dem Stromamplitudengrenzwert und Steuern der Ausgangsspannung der Wechselrichterschaltung (11) derart, dass sie der Zielspannungswert basierend auf dem amplitudenbegrenzten Steuerbetrag für den Wirkstrom und/oder dem amplitudenbegrenzten Steuerbetrag für den Blindstrom ist.

5. Photovoltaikwechselrichter (1) nach Anspruch 4, wobei die Steuerschaltung (10) ferner dazu konfiguriert ist, einen Betrag für die Wirkstromrückkopplung und/oder einen Betrag für die Blindstromrückkopplung basierend auf dem Steuerbetrag für den Wirkstrom und/oder dem Steuerbetrag für den Blindstrom und dem amplitudenbegrenzten Steuerbetrag für den Wirkstrom und/oder dem amplitudenbegrenzten Steuerbetrag für den Blindstrom zu erlangen;
die Steuerschaltung (10) ferner dazu konfiguriert ist, einen Einstellbetrag für die Wirkspannungsrückkopplung und/oder einen Einstellbetrag für die Blindspannungsrückkopplung basierend auf dem Betrag für die Wirkstromrückkopplung und/oder dem Betrag für die Blindstromrückkopplung zu erlangen; und
die Steuerschaltung (10) ferner dazu konfiguriert ist, den Steuerbetrag für den Wirkstrom und/oder den Steuerbetrag für den Blindstrom basierend auf dem Einstellbetrag für die Wirkspannung und/oder dem Einstellbetrag für die Blindspannung und dem Einstellbetrag für die Wirkspannungsrückkopplung und/oder dem Einstellbetrag für die Blindspannungsrückkopplung zu erlangen.

6. Photovoltaikwechselrichter (1) nach Anspruch 5, wobei die Steuerschaltung (10) ferner dazu konfiguriert ist, einen Einstellbetrag für die Wirkleistungsrückkopplung und/oder einen Einstellbetrag für die Blindleistungsrückkopplung basierend auf dem Betrag der Wirkstromrückkopplung und/oder dem Betrag der Blindstromrückkopplung zu erlangen; und
die Steuerschaltung (10) ferner zu Folgendem konfiguriert:
Erlangen eines Einstellbetrags für die Leistungswinkelrückkopplung der Spannung basierend auf dem Einstellbetrag für die Wirkleistungsrückkopplung und Erlangen des Einstellbetrags für die Wirkspannungsrückkopplung basierend auf dem Einstellbetrag für die Leistungswinkelrückkopplung der Ausgangsspannung; und/oder
Erlangen des Einstellbetrags für die Blindspannungsrückkopplung basierend auf dem Einstellbetrag für die Blindleistungsrückkopplung.

7. Netzgekoppeltes Steuerungsverfahren für einen Photovoltaikwechselrichter (1), wobei das Steuerungsverfahren auf einen netzgekoppelten Photovoltaikwechselrichter (1) anwendbar ist, der Photovoltaikwechselrichter (1) eine Steuerschaltung (10) und eine Wechselrichterschaltung (11) umfasst, ein Ende der Wechselrichterschaltung (11) mit einer Gleichstromversorgung (2) gekoppelt ist, das andere Ende der Wechselrichterschaltung (11) mit einem Stromnetz (3) an einem netzgekoppelten Punkt unter Verwendung einer Stromnetzimpedanz (Zg) gekoppelt ist, die Steuerschaltung (10) mit der Wechselrichterschaltung (11) gekoppelt ist und das Verfahren Folgendes umfasst:
Erfassen (S801) eines Stromwertes des netzgekoppelten Punktes;
wenn der Stromwert des netzgekoppelten Punktes größer als oder gleich einem Stromamplitudengrenzwert ist, Erlangen (S802) eines Einstellbetrags für die Wirkspannung und/oder eines Einstellbetrags für die Blindspannung basierend auf dem Stromwert des netzgekoppelten Punktes, dem Stromamplitudengrenzwert und einem Spannungswert des netzgekoppelten Punktes; und
Steuern (S803) einer Ausgangsspannung der Wechselrichterschaltung (11) derart, dass sie ein Zielspannungswert basierend auf dem Einstellbetrag für die Wirkspannung und/oder dem Einstellbetrag für die Blindspannung ist, um den Stromwert des netzgekoppelten Punktes durch Verringern der Wirkleistung und/oder der Blindleistung, die durch den Photovoltaikwechselrichter (1) ausgegeben werden, zu verringern, wobei
das Verfahren nach dem Erfassen eines Stromwertes des netzgekoppelten Punktes ferner Folgendes umfasst:
Erlangen eines Einstellbetrags für die Winkelfrequenz basierend auf dem Stromwert des netzgekoppelten Punktes, dem Stromamplitudengrenzwert und dem Spannungswert des netzgekoppelten Punktes; und
Einstellen einer Phase der Ausgangsspannung der Wechselrichterschaltung (11) auf eine Zielphase basierend auf dem Einstellbetrag für die Winkelfrequenz.

8. Steuerungsverfahren nach Anspruch 7, wobei das Erlangen eines Einstellbetrags für die Wirkspannung und/oder eines Einstellbetrags für die Blindspannung basierend auf dem Stromwert des netzgekoppelten Punktes, dem Stromamplitudengrenzwert und einem Spannungswert des netzgekoppelten Punktes Folgendes umfasst:
Erlangen (S901) eines Einstellbetrags für die Wirkleistung und/oder eines Einstellbetrags für die Blindleistung basierend auf dem Stromwert des netzgekoppelten Punktes, dem Stromamplitudengrenzwert und dem Spannungswert des netzgekoppelten Punktes; und
Erlangen (S902) des Einstellbetrags für die Wirkspannung und/oder des Einstellbetrags für die Blindspannung basierend auf dem Einstellbetrag für die Wirkleistung und/oder dem Einstellbetrag für die Blindleistung und Steuern der Ausgangsspannung der Wechselrichterschaltung (11) derart, dass sie der Zielspannungswert basierend auf dem Einstellbetrag für die Wirkspannung und/oder dem Einstellbetrag für die Blindspannung ist.

9. Steuerungsverfahren nach Anspruch 8, wobei das Steuern einer Ausgangsspannung der Wechselrichterschaltung (11) derart, dass sie ein Zielspannungswert basierend auf dem Einstellbetrag für die Wirkspannung und/oder dem Einstellbetrag für die Blindspannung ist, Folgendes umfasst:
Erlangen (S903) eines Steuerbetrags für den Wirkstrom und/oder eines Steuerbetrags für den Blindstrom basierend auf dem Einstellbetrag für die Wirkspannung und/oder dem Einstellbetrag für die Blindspannung; und
Steuern (S904) der Ausgangsspannung der Wechselrichterschaltung (11) derart, dass sie der Zielspannungswert basierend auf dem Steuerbetrag für den Wirkstrom und/oder dem Steuerbetrag für den Blindstrom ist.

10. Steuerungsverfahren nach Anspruch 9, wobei das Verfahren nach dem Erlangen eines Steuerbetrags für den Wirkstrom und/oder eines Steuerbetrags für den Blindstrom basierend auf dem Einstellbetrag für die Wirkspannung und/oder dem Einstellbetrag für die Blindspannung ferner Folgendes umfasst:
Erlangen eines amplitudenbegrenzten Steuerbetrags für den Wirkstrom und/oder eines amplitudenbegrenzten Steuerbetrags für den Blindstrom basierend auf dem Steuerbetrag für den Wirkstrom und/oder dem Steuerbetrag für den Blindstrom und dem Stromamplitudengrenzwert; und
Steuern der Ausgangsspannung der Wechselrichterschaltung (11) derart, dass sie der Zielspannungswert basierend auf dem amplitudenbegrenzten Steuerbetrag für den Wirkstrom und/oder dem amplitudenbegrenzten Steuerbetrag für den Blindstrom ist.

11. Steuerungsverfahren nach Anspruch 10, wobei das Verfahren nach dem Erlangen eines amplitudenbegrenzten Steuerbetrags für den Wirkstrom und/oder eines amplitudenbegrenzten Steuerbetrags für den Blindstrom basierend auf dem Steuerbetrag für den Wirkstrom und/oder dem Steuerbetrag für den Blindstrom und dem Stromamplitudengrenzwert ferner Folgendes umfasst:
Erlangen eines Betrags für die Wirkstromrückkopplung und/oder eines Betrags für die Blindstromrückkopplung basierend auf dem Steuerbetrag für den Wirkstrom und/oder dem Steuerbetrag für den Blindstrom und dem amplitudenbegrenzten Steuerbetrag für den Wirkstrom und/oder dem amplitudenbegrenzten Steuerbetrag für den Blindstrom;
Erlangen eines Einstellbetrags für die Wirkspannungsrückkopplung und/oder eines Einstellbetrags für die Blindspannungsrückkopplung basierend auf dem Betrag für die Wirkstromrückkopplung und/oder dem Betrag für die Blindstromrückkopplung; und
Erlangen des Steuerbetrags für den Wirkstrom und/oder des Steuerbetrags für den Blindstrom basierend auf dem Einstellbetrag für die Wirkspannung und/oder dem Einstellbetrag für die Blindspannung und dem Einstellbetrag für die Wirkspannungsrückkopplung und/oder dem Einstellbetrag für die Blindspannungsrückkopplung.

12. Steuerungsverfahren nach Anspruch 11, wobei das Erlangen eines Einstellbetrags für die Wirkspannungsrückkopplung und/oder eines Einstellbetrags für die Blindspannungsrückkopplung basierend auf dem Betrag für die Wirkstromrückkopplung und/oder dem Betrag für die Blindstromrückkopplung Folgendes umfasst:
Erlangen eines Einstellbetrags für die Wirkleistungsrückkopplung und/oder eines Einstellbetrags für die Blindleistungsrückkopplung basierend auf dem Betrag für die Wirkstromrückkopplung und/oder dem Betrag für die Blindstromrückkopplung; und
Ausgeben eines Einstellbetrags für die Leistungswinkelrückkopplung der Spannung basierend auf dem Einstellbetrag für die Wirkleistungsrückkopplung und Erlangen des Einstellbetrags für die Wirkspannungsrückkopplung basierend auf dem Einstellbetrag für die Leistungswinkelrückkopplung der Ausgangsspannung; und/oder
Erlangen des Einstellbetrags für die Blindspannungsrückkopplung basierend auf dem Einstellbetrag für die Blindleistungsrückkopplung.

## Revendications

1. Onduleur photovoltaïque (1) connecté au réseau, dans lequel l'onduleur photovoltaïque (1) comprend un circuit de commande (10) et un circuit onduleur (11), une extrémité du circuit onduleur (11) est connectée à une alimentation en courant continu (2), l'autre extrémité du circuit onduleur (11) est connectée au réseau électrique (3) en un point connecté au réseau en utilisant l'impédance de réseau électrique (Zg), et le circuit de commande (10) est connecté au circuit onduleur (11) ; et
le circuit de commande (10) est configuré pour : lorsqu'une valeur de courant du point connecté au réseau est supérieure ou égale à une valeur de limitation d'amplitude de courant, obtenir une quantité d'ajustement de tension active et/ou une quantité d'ajustement de tension réactive en fonction de la valeur de courant du point connecté au réseau, de la valeur de limitation d'amplitude de courant, et d'une valeur de tension du point connecté au réseau, et commander une tension de sortie du circuit onduleur (11) pour qu'elle soit une valeur de tension cible en fonction de la quantité d'ajustement de tension active et/ou de la quantité d'ajustement de tension réactive, afin de réduire la valeur de courant du point connecté au réseau en réduisant la puissance active et/ou la puissance réactive produite par l'onduleur photovoltaïque (1), **caractérisé en ce que**
le circuit de commande (10) est également configuré pour obtenir une quantité d'ajustement de fréquence angulaire en fonction de la valeur de courant du point connecté au réseau, la valeur de limitation d'amplitude de courant et la valeur de tension du point connecté au réseau ; et
le circuit de commande (10) est également configuré pour ajuster une phase de la tension de sortie du circuit onduleur (11) à une phase cible en fonction de la quantité d'ajustement de fréquence angulaire.

2. Onduleur photovoltaïque (1) selon la revendication 1, dans lequel le circuit de commande (10) est également configuré pour : obtenir une quantité d'ajustement de puissance active et/ou une quantité d'ajustement de puissance réactive en fonction de la valeur de courant du point connecté au réseau, de la valeur de limitation d'amplitude de courant, et de la valeur de tension du point connecté au réseau, obtenir la quantité d'ajustement de tension active et/ou la quantité d'ajustement de tension réactive en fonction de la quantité d'ajustement de puissance active et/ou de la quantité d'ajustement de puissance réactive, et commander la tension de sortie du circuit onduleur (11) pour qu'elle soit la valeur de tension cible en fonction de la quantité d'ajustement de tension active et/ou de la quantité d'ajustement de tension réactive.

3. Onduleur photovoltaïque (1) selon la revendication 2, dans lequel le circuit de commande (10) est également configuré pour : obtenir une quantité de commande de courant actif et/ou une quantité de commande de courant réactif en fonction de la quantité d'ajustement de tension active et/ou de la quantité d'ajustement de tension réactive, et commander la tension de sortie du circuit onduleur (11) pour qu'elle soit la valeur de tension cible en fonction de la quantité de commande de courant actif et/ou de la quantité de commande de courant réactif.

4. Onduleur photovoltaïque (1) selon la revendication 3, dans lequel le circuit de commande (10) est également configuré pour : obtenir une quantité de commande de courant actif à amplitude limitée et/ou une quantité de commande de courant réactif à amplitude limitée en fonction de la quantité de commande de courant actif et/ou de la quantité de commande de courant réactif et de la valeur de limitation d'amplitude de courant, et commander la tension de sortie du circuit onduleur (11) pour qu'elle soit la valeur de tension cible en fonction de la quantité de commande de courant actif à amplitude limitée et/ou de la quantité de commande de courant réactif à amplitude limitée.

5. Onduleur photovoltaïque (1) selon la revendication 4, dans lequel le circuit de commande (10) est également configuré pour obtenir une quantité de rétroaction de courant actif et/ou une quantité de rétroaction de courant réactif en fonction de la quantité de commande de courant actif et/ou de la quantité de commande de courant réactif et de la quantité de commande de courant actif à amplitude limitée et/ou de la quantité de commande de courant réactif à amplitude limitée ;
le circuit de commande (10) est également configuré pour obtenir une quantité d'ajustement de rétroaction de tension active et/ou une quantité d'ajustement de rétroaction de tension réactive en fonction de la quantité de rétroaction de courant actif et/ou de la quantité de rétroaction de courant réactif ; et
le circuit de commande (10) est également configuré pour obtenir la quantité de commande de courant actif et/ou la quantité de commande de courant réactif en fonction de la quantité d'ajustement de tension active et/ou de la quantité d'ajustement de tension réactive et de la quantité d'ajustement de rétroaction de tension active et/ou de la quantité d'ajustement de rétroaction de tension réactive.

6. Onduleur photovoltaïque (1) selon la revendication 5, dans lequel le circuit de commande (10) est également configuré pour obtenir une quantité d'ajustement de rétroaction de puissance active et/ou une quantité d'ajustement de rétroaction de puissance réactive en fonction de la quantité de rétroaction de courant actif et/ou de la quantité de rétroaction de courant réactif ; et
le circuit de commande (10) est également configuré pour : obtenir une quantité d'ajustement de rétroaction d'angle de puissance de la tension en fonction de la quantité d'ajustement de rétroaction de puissance active, et obtenir la quantité d'ajustement de rétroaction de tension active en fonction de la quantité d'ajustement de rétroaction d'angle de puissance de la tension de sortie ; et/ou
obtenir la quantité d'ajustement de rétroaction de tension réactive en fonction de la quantité d'ajustement de rétroaction de puissance réactive.

7. Procédé de commande connecté au réseau pour un onduleur photovoltaïque (1), dans lequel le procédé de commande est applicable à un onduleur photovoltaïque (1) connecté au réseau, l'onduleur photovoltaïque (1) comprend un circuit de commande (10) et un circuit onduleur (11), une extrémité du circuit onduleur (11) est connectée à une alimentation en courant continu (2), l'autre extrémité du circuit onduleur (11) est connectée à un réseau électrique (3) en un point connecté au réseau en utilisant l'impédance de réseau électrique (Zg), et le circuit de commande (10) est connecté au circuit onduleur (11), et le procédé comprend :
la détection (S801) d'une valeur de courant du point connecté au réseau ;
lorsque la valeur de courant du point connecté au réseau est supérieure ou égale à une valeur de limitation d'amplitude de courant, l'obtention (S802) d'une quantité d'ajustement de tension active et/ou d'une quantité d'ajustement de tension réactive en fonction de la valeur de courant du point connecté au réseau, de la valeur de limitation d'amplitude de courant, et d'une valeur de tension du point connecté au réseau ; et
la commande (S803) d'une tension de sortie du circuit onduleur (11) pour qu'elle soit une valeur de tension cible en fonction de la quantité d'ajustement de tension active et/ou de la quantité d'ajustement de tension réactive, afin de réduire la valeur de courant du point connecté au réseau en réduisant la puissance active et/ou la puissance réactive produite par l'onduleur photovoltaïque (1), dans lequel
après la détection d'une valeur de courant du point connecté au réseau, le procédé comprend également :
l'obtention d'une quantité d'ajustement de fréquence angulaire en fonction de la valeur de courant du point connecté au réseau, de la valeur de limitation d'amplitude de courant, et de la valeur de tension du point connecté au réseau ; et
l'ajustement d'une phase de la tension de sortie du circuit onduleur (11) à une phase cible en fonction de la quantité d'ajustement de fréquence angulaire.

8. Procédé de commande selon la revendication 7, dans lequel l'obtention d'une quantité d'ajustement de tension active et/ou d'une quantité d'ajustement de tension réactive en fonction de la valeur de courant du point connecté au réseau, de la valeur de limitation d'amplitude de courant et d'une valeur de tension du point connecté au réseau comprend :
l'obtention (S901) d'une quantité d'ajustement de puissance active et/ou d'une quantité d'ajustement de puissance réactive en fonction de la valeur de courant du point connecté au réseau, de la valeur de limitation d'amplitude de courant et de la valeur de tension du point connecté au réseau ; et
l'obtention (S902) de la quantité d'ajustement de tension active et/ou de la quantité d'ajustement de tension réactive en fonction de la quantité d'ajustement de puissance active et/ou de la quantité d'ajustement de puissance réactive, et la commande de la tension de sortie du circuit onduleur (11) pour qu'elle soit la valeur de tension cible en fonction de la quantité d'ajustement de tension active et/ou de la quantité d'ajustement de tension réactive.

9. Procédé de commande selon la revendication 8, dans lequel la commande de la tension de sortie du circuit onduleur (11) pour qu'elle soit une valeur de tension cible en fonction de la quantité d'ajustement de tension active et/ou de la quantité d'ajustement de tension réactive comprend :
l'obtention (S903) d'une quantité de commande de courant actif et/ou d'une quantité de commande de courant réactif en fonction de la quantité d'ajustement de tension active et/ou de la quantité d'ajustement de tension réactive ; et
la commande (S904) de la tension de sortie du circuit onduleur (11) pour qu'elle soit la valeur de tension cible en fonction de la quantité de commande de courant actif et/ou de la quantité de commande de courant réactif.

10. Procédé de commande selon la revendication 9, dans lequel après l'obtention d'une quantité de commande de courant actif et/ou d'une quantité de commande de courant réactif en fonction de la quantité d'ajustement de tension active et/ou de la quantité d'ajustement de tension réactive, le procédé comprend également :
l'obtention d'une quantité de commande de courant actif à amplitude limitée et/ou d'une quantité de commande de courant réactif à amplitude limitée en fonction de la quantité de commande de courant actif et/ou de la quantité de commande de courant réactif et de la valeur de limitation d'amplitude de courant ; et
la commande de la tension de sortie du circuit onduleur (11) pour qu'elle soit la valeur de tension cible en fonction de la quantité de commande de courant actif à amplitude limitée et/ou de la quantité de commande de courant réactif à amplitude limitée.

11. Procédé de commande selon la revendication 10, dans lequel après l'obtention d'une quantité de commande de courant actif à amplitude limitée et/ou d'une quantité de commande de courant réactif à amplitude limitée en fonction de la quantité de commande de courant actif et/ou de la quantité de commande de courant réactif et de la valeur de limitation d'amplitude de courant, le procédé comprend également :
l'obtention d'une quantité de rétroaction de courant actif et/ou d'une quantité de rétroaction de courant réactif en fonction de la quantité de commande de courant actif et/ou de la quantité de commande de courant réactif et de la quantité de commande de courant actif à amplitude limitée et/ou de la quantité de commande de courant réactif à amplitude limitée ;
l'obtention d'une quantité d'ajustement de rétroaction de tension active et/ou d'une quantité d'ajustement de rétroaction de tension réactive en fonction de la quantité de rétroaction de courant actif et/ou de la quantité de rétroaction de courant réactif ; et
l'obtention de la quantité de commande de courant actif et/ou de la quantité commande de courant réactif en fonction de la quantité d'ajustement de tension active et/ou de la quantité d'ajustement de tension réactive et de la quantité d'ajustement de rétroaction de tension active et/ou de la quantité d'ajustement de rétroaction de tension réactive.

12. Procédé de commande selon la revendication 11, dans lequel l'obtention d'une quantité d'ajustement de rétroaction de tension active et/ou d'une quantité d'ajustement de rétroaction de tension réactive en fonction de la quantité de rétroaction de courant actif et/ou de la quantité de rétroaction de courant réactif comprend :
l'obtention d'une quantité d'ajustement de rétroaction de puissance active et/ou d'une quantité d'ajustement de rétroaction de puissance réactive en fonction de la quantité de rétroaction de courant actif et/ou de la quantité de rétroaction de courant réactif ; et
la production d'une quantité d'ajustement de rétroaction d'angle de puissance de la tension en fonction de la quantité d'ajustement de rétroaction de puissance active, et l'obtention de la quantité d'ajustement de rétroaction de tension active en fonction de la quantité d'ajustement de rétroaction d'angle de puissance de la tension de sortie ; et/ou
l'obtention de la quantité d'ajustement de rétroaction de tension réactive en fonction de la quantité d'ajustement de rétroaction de puissance réactive.
